# EUROPEAN PATENT APPLICATION

(11) **EP 2 312 785 A2**
(43) Date of publication of application: **20.04.2011**
(21) Application number: 10187478.2
(22) Date of filing: 13.10.2010
(51) Int. Cl.: H04L 1/16

(54) **System and method for sending and receiving acknowledgement information to avoid decoding ambiguity**

(30) Priority: 14.10.2009 US 251649 P
(71) Applicant: RESEARCH IN MOTION LIMITED, Waterloo, Ontario N2L 3W8 (CA)
(72) Inventor: Venkob, Satish, Waterloo Ontario N2L 3W8 (CA); Conway, Dennis, Mississauga Ontario L4W 0B5 (CA); Dwyer, Johanna Lisa, Ottawa Ontario K2K 3K1 (CA)
(74) Representative: Moore, Barry

(57) **Abstract**

Systems and methods for sending and receiving acknowledgment information to avoid decoding confusion. A disclosed example includes sending an indication of whether data blocks received by the mobile station after a poll are or will be accounted for in acknowledgement information, receiving the poll from a network, the poll requesting acknowledgement information, and sending to the network the acknowledgement information requested in the poll.

## Description

### RELATED APPLICATIONS

This patent claims the benefit of U.S. Provisional Patent Application Serial No. 61/251,649, filed on October 14, 2009, and entitled "SYSTEMS AND METHODS FOR SENDING AND RECEIVING PIGGY-BACKED ACK/NACK INFORMATION TO AVOID DECODING CONFUSION." The disclosure of U.S. Provisional Patent Application Serial No. 61/251,649 is hereby incorporated by reference herein in its entirety.

### FIELD OF THE DISCLOSURE

The application relates generally to mobile networks and more particularly to systems and methods for sending and receiving acknowledgement information.

### BACKGROUND

In mobile communications a basic transmit time interval (BTTI) block consists of a slot allocated over four consecutive frames. For example, frame 1 slot 1, frame 2 slot 1, frame 3 slot 1 and frame 4 slot 1 make up a BTTI block. In some implementations, a frame is approximately 5 milliseconds (ms) in duration, such that a BTTI block will span over four frames, or a 20 ms interval. A BTTI temporary block flow (TBF) is a TBF that uses BTTI blocks.

A reduced transmit time interval (RTTI) (part of global system for mobile communication (GSM) enhanced data rates for GSM evolution (EDGE) radio access network (GERAN) latency reduction feature) block uses the same frame structure described above, but an RTTI block consists of a pair of slots during a first frame, and a pair of slots during the next frame such that an RTTI block will span over two frames or a 10 ms interval. An RTTI TBF is a TBF which uses RTTI blocks. The transmission interval for an RTTI block is one-half the transmission interval of a BTTI block.

To perform uplink BTTI allocation, the network transmits an uplink state flag (USF) during a downlink BTTI block in a downlink slot of a preceding block period. The mobile station is thereby allocated a timeslot for uplink transmission of an uplink BTTI block that has the same number as that of the downlink slot used to transmit the USF.

The transmissions from a base station transceiver station (BTS) during a given radio block period may contain zero, one, or more than one blocks for a given mobile station, each block having a respective block sequence number.

To perform RTTI allocation, the network transmits USF signalling during the previous radio block period on a pair of timeslots. The mobile station is allocated a pair of uplink timeslots for transmission of an uplink RTTI block, these slots being defined as the "corresponding slot pair" or "corresponding PDCH (packet data channel) - pair" to the downlink pair used to transmit the USF. The corresponding uplink slots may or may not be the same as the downlink slots used to transmit USFs.

There is also a hybrid version of RTTI allocation where two BTTI USFs are used to allocate two RTTI blocks. Specifically, a first BTTI USF is used to allocate an RTTI radio block in the first two frames of the four frames that follow the two BTTI USFs, and a second BTTI USF is used to allocate an RTTI block in the second two frames of the four frames the follow the two BTTI USFs.

The feature "Latency Reductions" was added to enhanced general packet radio service (EGPRS) in 3GPP Release 7. One aspect of this feature is so-called "Fast Ack/Nack Reporting" (FANR).

Without FANR, all radio link control (RLC) acknowledgements (that is, indications by the receiver of RLC data blocks whether it had correctly received RLC data blocks sent by the transmitter) were done by means of "Packet Ack/Nack" messages, such as EGPRS Packet Downlink ACK/NACK messages, or Packet Uplink ACK/NACK messages. These messages are RLC/MAC control messages and did not contain any RLC data (though they may contain other RLC/MAC control information besides acknowledgement information).

The disadvantage of this approach is that it is quite inefficient, particularly when acknowledgement information needs to be sent quickly (e.g. in order to allow fast retransmissions of erroneously received blocks) or when the status of very few blocks needs to be indicated (e.g. in low bandwidth transmissions). In either scenario, the amount of acknowledgement information that is actually useful is very small compared to the capacity of an RLC/MAC control block.

The FANR feature allows piggy-backing of a small amount of acknowledgement information together with one or more RLC data blocks. In this case, the acknowledgement information is referred to as a PAN (piggy-backed Ack/Nack) field.

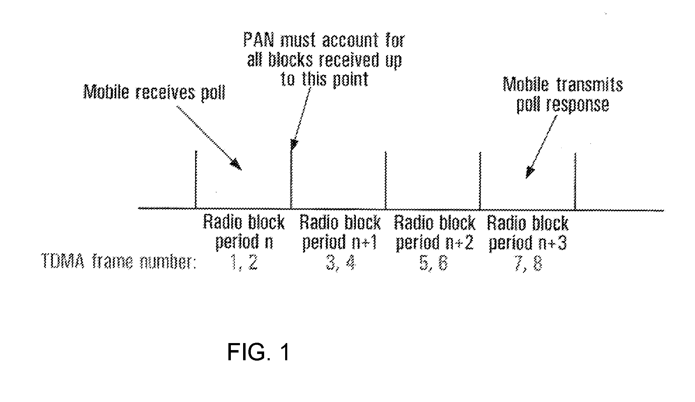

An example of an exchange between a network and a mobile station involving the PAN field is depicted in Figure 1.

Note that polls that request an uplink transmission in a given radio block period are sent much earlier than USFs which allocate resources in the same radio block period. It is possible that a poll and a USF may refer to the same uplink transmission opportunity (this is well-known and taken into account by the network when performing scheduling).

In the case of a PACCH block or a PAN field, the mobile station is allowed a minimum of 4 time division multiple access (TDMA) frames periods (approx. 20ms) to encode the PACCH block or PAN field (for reference see table 10.4.4b in 3GPP TS 44.060, which states that the shortest delay between the start of the poll transmission and the start of the response is 6 TDMA frames. Because the end of the poll is received 2 TDMA frame periods after the start of the transmission of the poll, this leaves 4 TDMA frame periods for constructing and encoding the response.

In addition to sending a PAN in response to a poll, a mobile station may be required to send PANs 'pro-actively' based on the status of the data blocks it has received. This is referred to as Event-based FANR. If Event-based FANR is enabled, the mobile station is expected to report, by means of a PAN sent at the earliest opportunity, missing blocks.

In order to specify this behavior, data blocks which are known to be missing are classified as either REPORTED, or UNREPORTED. On initial detection of a missing block, the status of that block is set to UNREPORTED. When the status of that block is indicated by means of any acknowledgement information (e.g., Ack/Nack information) (need not necessarily be a PAN), the state is set to REPORTED. If Event-based FANR is active, mobile stations are required to insert PANs into uplink (UL) data blocks for as long as there exists blocks (e.g., downlink blocks) with the status UNREPORTED.

A "missing" data block may be detected either by out-of-sequence reception (e.g. receiving block 4 before block 3 has been received would indicate that block 3 is missing) or by decoding the block header (which includes the block sequence number) but failing to decode the data portion correctly.

The current 3GPP specifications indicate that:
- considering BTTI operation (where 1 BTTI radio block period = 4 TDMA frames), the reaction time for the mobile station is such that if a mobile station determines at the end of block period n that a PAN is to be sent, the PAN is to be sent (or possible to be sent, if event-based) in block period n+2.
- considering RTTI operation (where 1 RTTI radio block period = 2 TDMA frames), the reaction time for the mobile station is such that if a mobile station determines at the end of block period n that a PAN is to be sent, the PAN is to be sent (or possible to be sent, if event-based) in block period n+3.

The reaction times referred to above ignore 'idle' or 'search' TDMA frames which may be used for neighbor cell measurements, etc.

A PAN sent in response to the poll includes a bitmap; the bitmap is a sequence of 1's and 0's corresponding to a consecutive sequence of block sequence numbers (BSNs) plus (optionally) some padding. Each bit indicates an ACK or NACK for the block having the block sequence number. The PAN also includes information from which the BSN of the first (lowest) BSN being reported can be determined. In some cases, a bitmap is generated which is not full, because the bitmap has a fixed size and there are fewer blocks to acknowledge than allowed for by the fixed size of the bitmap. In this case, the bitmap includes a bit for each of the blocks to acknowledge, and is then padded, for example with 0's, to complete the bitmap. The transmission of blocks is not necessarily in numerical order, for example because of retransmissions. Thus, correspondingly, the mapping of bits in the PAN bitmap is not necessarily in accordance with the order in which the blocks were transmitted.

In an example of a possible constraint on bitmap generation, for polled PANs, 3GPP TS 44.060 v.7.17.0, sub-clause 9.1.8.2.3, it is stated:
9.1.8.2.3 Generation of the bitmap
[...]
For EGPRS TBFs using downlink dual carrier configuration, with FANR activated or using EGPRS2 and for EGPRS TBFs running in RLC non-persistent mode, when the mobile station is polled, V(R) shall be determined taking into account all RLC data blocks received up to and including those received in the radio block period where the poll is received. As an implementation option, the mobile station may also consider RLC data blocks that are received in following radio block periods, taking into account all RLC data blocks received in those radio block periods.
[...]

Note that 3GPP TS 44.060 does not include similar corresponding text for event-based PANs.

### BRIEF DESCRIPTION OF THE DRAWINGS

FIGS. 1-6, 9, 10, 19, 26-29 illustrate example exchanges between a network and a mobile station.

FIGS. 7, 8, 11-18, 20-25 are flowcharts of example methods for sending piggy-backed Ack/Nack information as described herein.

FIG. 30 is a block diagram of components of an example communication system.

FIG. 31 a block diagram of another mobile station that may implement mobile station related methods described herein.

### DETAILED DESCRIPTION

Methods and apparatus described herein facilitate acknowledgement information (e.g., such as ACK/NACK information contained within a piggy-backed ACK/NACK (PAN), EGPRS packet downlink ACK/NACK, etc.) communication between a mobile station (MS) and a network to avoid confusion in decoding the acknowledgement (e.g., ACK/NACK) information. According to an example method, the mobile station provides an indication to the network to indicate the period for which ACK/NACK reporting is provided. The MS may indicate that a PAN message includes reporting for block periods after a poll or event has caused a PAN to be sent and before the PAN is sent.

As indicated in the background, due to the "implementation option" allotted to the MS, the MS may consider RLC data blocks that are received in the following block periods (the block periods following the block period within which the poll was received), taking into account all the RLC data blocks received in those periods.

By providing timely ACK/NACK information to the network, it may be possible to avoid unnecessary retransmission of blocks that the mobile station has successfully received, and to trigger retransmissions of blocks that the mobile station has not yet received correctly. While the implementation option described above allows for the mobile station to include timely information, this option may result in ambiguity in the interpretation of a PAN field, negating the benefits of the timely reporting.

The network does not know a priori to what extent (if any) the mobile station is making use of this implementation option. More specifically, the network may not be able to determine whether the mobile station is generating a PAN taking account of RLC data blocks that are received in radio block periods following the poll, taking into account all RLC data blocks received in those radio block periods, as allowed by, but not mandated by 3GPP TS 44.060 v.7.17.0, sub-clause 9.1.8.2.3.

This leads to two possibilities for ambiguity or confusion. The first possibility for confusion stems from the lack of distinction between padding bits and ACK/NACK bits. For example, in 3GPP TS 44.060 v. 7.17.0, padding bits and NACK indications both use a'0' indication. As such, the network may not be able to tell if a particular bit in a bitmap is a padding bit as opposed to a NACK if the bit position corresponds with a block transmitted during a questionable radio block period. This is illustrated in examples 1-4 described below.

The second possibility confusion stems from not knowing whether the generation of a particular ACK/NACK bit has taken into account a particular transmission of a block. In some cases, the network may be able to determine that the status of a particular block (which may be identified by its sequence number) is reported within the bitmap. However, if multiple instances of that block have been transmitted, the network may not be able to determine which instances the ACK/NACK information relates to, and in particular whether the ACK/NACK information takes account of the most recent transmissions of that block. This second possibility for confusion arises where the status of a block is reported in the bitmap, but the network had transmitted multiple instances of the block, including one or more instances transmitted before or during the last radio block period for which the status of the received block must be taken into account by a mobile station when constructing a PAN, and one or more instances transmitted during subsequent radio block periods (but before the PAN is transmitted). The network may not be able to determine whether or not the mobile station report has taken into account the latter transmission(s). This is illustrated in Example 3.

This second possibility for confusion arises not only in PAN bitmaps, but also in other bitmap-based ACK/NACK information where each bit corresponds to a particular block (and does not explicitly distinguish the status of multiple individual transmissions of the same block) and where the mobile station has some flexibility in determining the instant in time at which the status of received blocks is reported. For example, this applies in the case of EGPRS PACKET DOWNLINK ACK/NACK messages and EGPRS PACKET DOWNLINK ACK/NACK TYPE 2 messages sent by mobile stations operating using a downlink dual carrier configuration, using the EGPRS2 feature, or running in RLC non-persistent mode (see 3GPP TS 44.060 v.7.17.0). This second type of confusion arises even when there is no padding or where the end of the bitmap is explicitly indicated, hence the example implementations below apply in this case as well.

These two possibilities for confusion will now be described in detail by way of example. Examples 1, 2, 3 and 4 are provided below to illustrate this problem.

Considering RTTI, the timeline for a poll and response is as shown in Figure 1, where the TDMA frame numbers assume that there are no 'search'/idle frames in the sequence. In radio block period n, the mobile station receives the poll. For RTTI, the mobile station transmits a response to the poll 3 radio block periods later, namely in radio block period n+3. The PAN transmitted by the mobile station accounts for radio blocks received up to and including the radio block period within which the mobile station receives the poll, to the extent capacity of the PAN makes this possible. The mobile station may (according to 3GPP TS 44.060 v.7.17.0, sub-clause 9.1.8.2.3) additionally report blocks received during radio block periods n+1 and n+2.

Example 1:

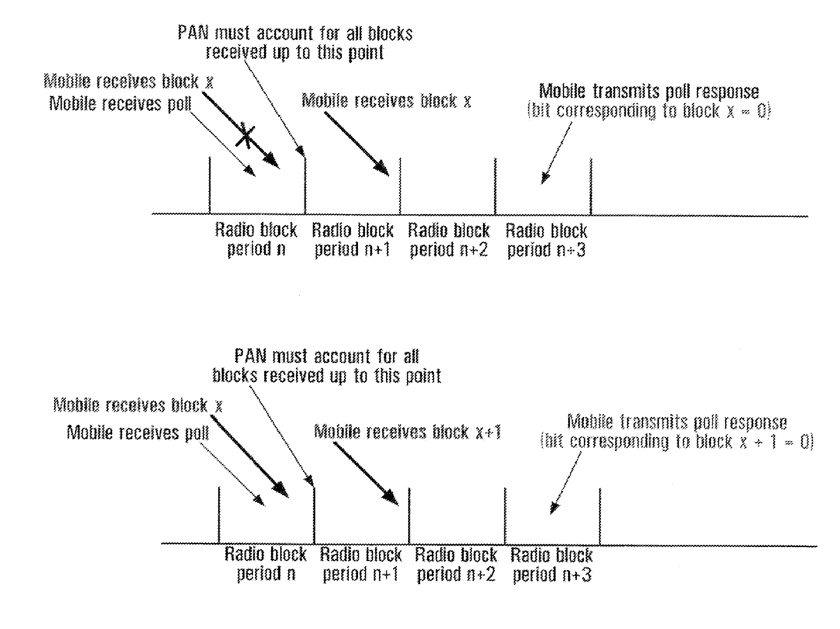

With reference to Figure 2, during block period n, the mobile station receives data block x, but with errors. During block period n, the mobile station also receives a poll for a PAN. During block period n+1, the mobile station receives a (pre-emptive ― in the sense that the network is retransmitting even though it doesn't at this stage know whether the retransmission is needed or not) retransmission of block x. During block period n+3, the mobile station transmits a PAN:
- if the PAN indicates an ACK (where ACK = 1 for this example) for block x, the network knows that the mobile station received at least one copy of block x correctly
- if the PAN indicates a 0 (where NACK = 0 for this example) for block x, the network does not know if:
   i) the mobile station did not receive x correctly during block n, and did not take into account the reception of block x during block n+1 when building the PAN) or
   ii) the mobile station did not receive either transmission of block x (during block n or during block n+1) correctly, and did take into account the reception of block x during block n+1 when building the PAN by sending a '0'-.
Since the network cannot determine which of the above is the case, it does not know whether the mobile station took account of block n+1 when building the PAN, and hence it cannot determine whether or not the mobile station has received block x correctly.

Example 2

With reference to Figure 3, the mobile station receives block x+1 during block period n+1. The mobile station transmits in its poll response a NACK indication for block \x+1 (because block x+1 was not correctly received). Because the same value (0) is used both for 'padding' (that is, for sequence numbers which the mobile station has not yet received and does not consider missing) and for NACK indications, the network cannot tell whether this 0 is a padding zero (because the mobile station took account only of blocks received up to block period n) or a NACK zero (because the mobile station took account of block period n+1 and did not correctly receive block x+1).

Example 3

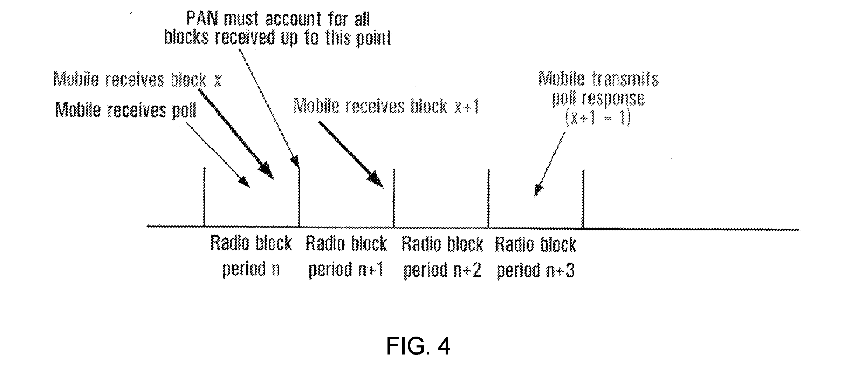

Note that the above examples are based on the current specifications, whereby 'padding' bits are set to '0', which is the same as used for NACKs. If padding bits are set to '1' and all'1' bits are ignored (similarly to how PANs received by the mobile station are interpreted), a similar problem arises as shown by way of example in Figure 4. Here, the '1' indication is ambiguous. It could be a padding bit, or an ACK indication for block x+1.

Example 4

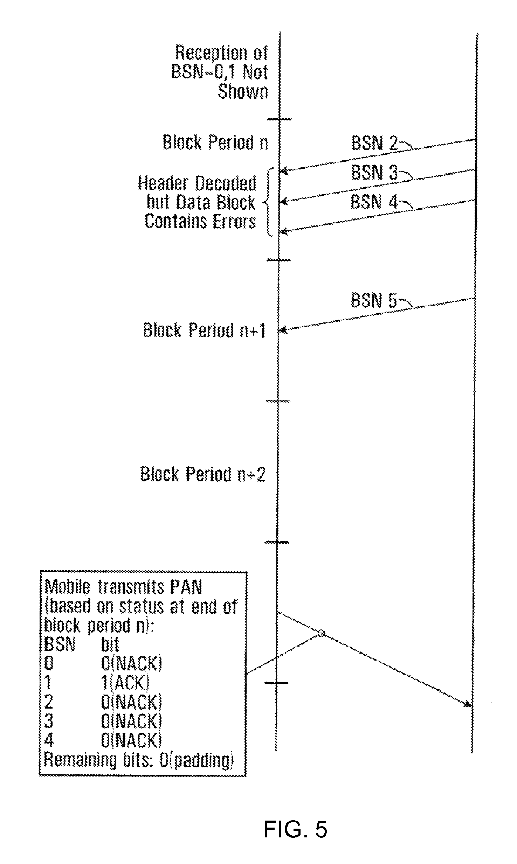

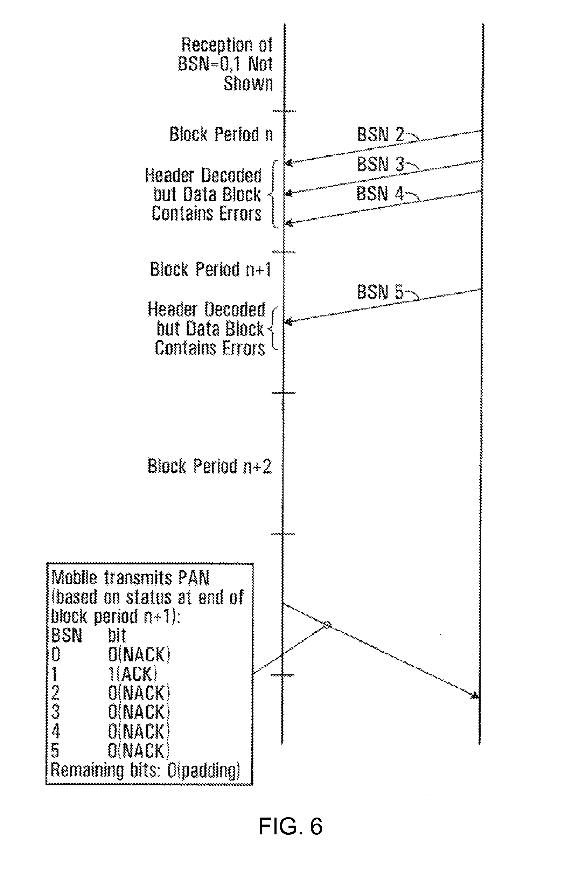

Another example will be described with reference to Figures 5 and 6. In Figure 5, the mobile station transmits PAN based on the status at the end of block period n. In this case, BSN (block sequence number) 5 could have been received correctly or not, but in any event the PAN does not include ACK/NACK for BSN 5. In Figure 6, the mobile station transmits PAN based on the status at the end of block period n+1. It can be seen that in Figure 6, a "0 (NACK)" is transmitted for BSN 5, and that in Figure 5, in the same position, a padding bit "0" is sent. The network would receive exactly the same thing in the two cases, and cannot distinguish between the two cases.

Disadvantageously, there is no specification as to which blocks shall/may be reported by means of event-based PANs (in terms of block periods during which those blocks were received).

Furthermore, the mobile station keeps track of which missing blocks it has reported to the network (see Event-based FANR in Background section). Under event-based FANR rules, mobile stations will stop sending Event-based PANs if they have no UNREPORTED blocks. However, due to the confusion as to which radio block periods the mobile station has taken into account, the following may arise:
- if the mobile station does consider, say, block period n+1 when building the PAN, then any missing blocks identified as a result of receptions during that period will (after sending the PAN) be considered REPORTED
- however, the network may misinterpret these indications by assuming that the bits corresponding to these blocks are padding bits.

As a result, the efficiency of the event-based FANR breaks down, because the mobile station believes that it has informed the network of some missing blocks, but the network misinterprets the indication and does not act on these NACKs.

For poll-based PAN transmissions, in what follows, a "questionable radio block period" is a radio block period that is subsequent to a radio block period within which a poll was sent, and prior to the radio block period within which the PAN is transmitted. For RTTI, there are two such radio block periods, referred to as radio block periods n+1 and n+2, where the poll was transmitted during radio block period n. For BTTI, there is one such radio block period, referred to as radio block period n+1, where the poll was transmitted during radio block period n. The number of questionable radio block periods can be different (greater than or less than) from what is set out above if the reaction time of the mobile station is changed, for example as described for some of the examples below in which the number of questionable radio block periods is reduced.

Similarly, for event-based PAN transmissions, in what follows, a "questionable radio block period" is a radio block period that is subsequent to a radio block period within which the mobile station determines that there is a block missing, and prior to the radio block period within which the event-based PAN is transmitted. For RTTI, there are two such radio block periods, and for BTTI, there is one such radio block period.

**Network Ignores Information Relating to Questionable radio block periods**

In some embodiments, the network is configured to ignore information relating to "questionable" radio block periods. In the event the mobile station did send an ACK or NACK in respect of a block transmitted during a questionable radio block period, the network will not process this, and will likely re-send the block. For RTTI, the network will ignore the portion(s) of the bitmap that would correspond to blocks transmitted during radio block periods n+1, n+2, while for BTTI, the network will ignore the portion(s) of the bitmap that would correspond to block(s) transmitted during period n. The portions that are ignored may or may not be contiguous and may or may not come at the end of the bitmap. In some cases, there may be higher BSNs which are unambiguously reported, while the status of some lower number BSNs are questionable.

**Configure the mobile station to not report on blocks received during the radio block period immediately preceding the transmission of the PAN**

With this embodiment, the mobile station is configured to not report on blocks received during the radio block period immediately preceding the transmission of the PAN. Recall that for RTTI, assuming a response time of 3, the questionable radio block periods may include radio block periods n+1 and n+2. Radio block period n+2 is immediately before the transmission of the PAN in radio block period n+3, and as such with this approach, the mobile station is configured to not send PAN in respect of any blocks received during radio block period n+2. In other words, radio block period n+2 is no longer a questionable radio block period.

Recall that for BTTI, assuming a response time of one, the questionable radio block periods include radio block period block n+1. Radio block period n+1 is immediately before the transmission of the PAN in radio block period n+2, and as such with this approach, the mobile station is configured to not send PAN in respect of radio block period n+1. In other words, radio block period n+1 is no longer a questionable radio block period. In effect, there are no questionable radio block periods for BTTI.

The defined response time for RTTI or BTTI may be changed (from 3 and 2 respectively). In this case, the number of questionable radio block periods for this method would change accordingly. For example, if the response time was 3 for BTTI, then the mobile station would not report on blocks in radio block period n+2, but may report on blocks in radio block period n+1 so there is one questionable block period.

In some embodiments, this approach is combined with the above described embodiment in which the network ignores information relating to questionable radio block periods. In this case, ignoring information corresponding to the questionable radio block period(s) has a smaller effect on the efficiency of the FANR algorithm than currently (because there are fewer questionable radio block periods).

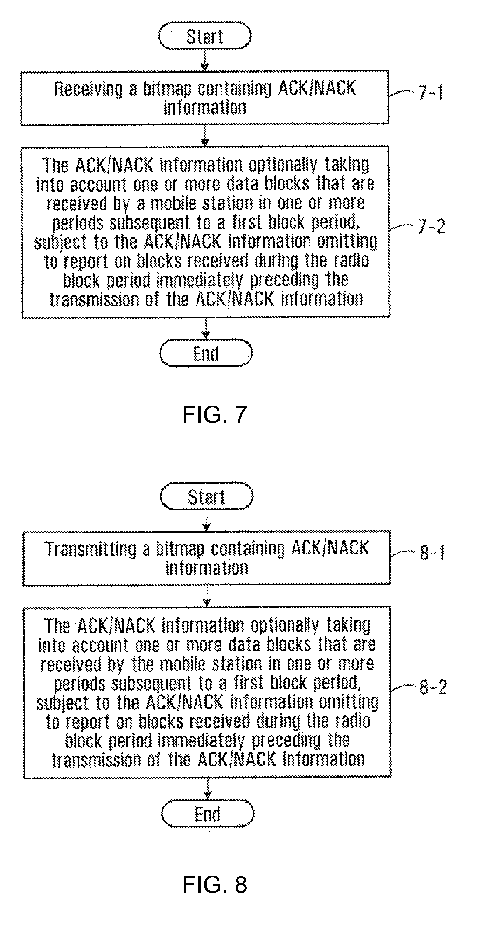

A flowchart of a method for implementation in a network, for example by one or more components of the network will now be described with reference to Figure 7. The method begins in block 7-1 with receiving a bitmap containing ACK/NACK information. As indicated at block 7-2, the ACK/NACK information optionally takes into account one or more data blocks that are received by a mobile station in one or more periods subsequent to a first block period, subject to the ACK/NACK information omitting to report on blocks received during the radio block period immediately preceding the transmission of the ACK/NACK information.

The corresponding method for implementation by a mobile station will now be described with reference to Figure 8. The method begins at block 8-1 with transmitting a bitmap containing ACK/NACK information. As indicated in block 8-2, the ACK/NACK information optionally takes into account one or more data blocks that are received by the mobile station in one or more periods subsequent to a first block period, subject to the ACK/NACK information omitting to report on blocks received during the radio block period immediately preceding the transmission of the ACK/NACK information.

**Validate information relating to questionable radio block periods.**

Under the existing coding, padding and NACKs may be indistinguishable and/or it may be impossible to determine if a transmission of a block during a questionable radio block period (that had been previously transmitted) has been considered in constructing the bitmap. However, if an ACK (bit = 1), and it can be validated that the ACK bit is in respect of a block which was transmitted during a questionable radio block period (so that the network could be sure that the ACK corresponded to that transmission, and not an earlier transmission of the same block) then the network deduces that the mobile station had taken into account that questionable radio block period (and any earlier questionable radio block periods). The network can then make use of any ACK/NACK information in respect of radio blocks transmitted during the questionable block period(s) thus validated knowing that the mobile station had taken into account transmissions received during that questionable block period(s).

The validation of a questionable radio block period (QBP) may, for example, depend on the fact that:
- a bit sent corresponding to a block (with BSN=b) received in the QBP is not the same as a padding bit
- *and* the network is sure that the bit corresponds to the reception of block b during the QBP, and not some earlier reception of block b.

For example, if the padding bits are 0s (also used for NACKs), it requires that
- a bit sent corresponding to block b sent in the QBP is set to 1 (=ACK)
- and, either:
- this is the first possible reception of block b (because it was the first transmission by the network)
- or, the most recent previous reception failed and was NACKed. (If this condition is not met, the network does not know whether i) the mobile station is treating blocks in the QBP and block b in that period was received correctly, or ii) the mobile station is not treating blocks in the QBP and the mobile station is reporting the state of the earlier transmission of block b).

If it is not possible to validate this questionable radio block period, then the network assumes that the mobile station is not taking into account those transmissions.

A similar approach can be implemented if the coding is reversed (so that padding uses '1' bits, rather than '0' bits). In this case, validation requires a NACK / 0 bit to correspond to a transmission during the questionable radio block period.

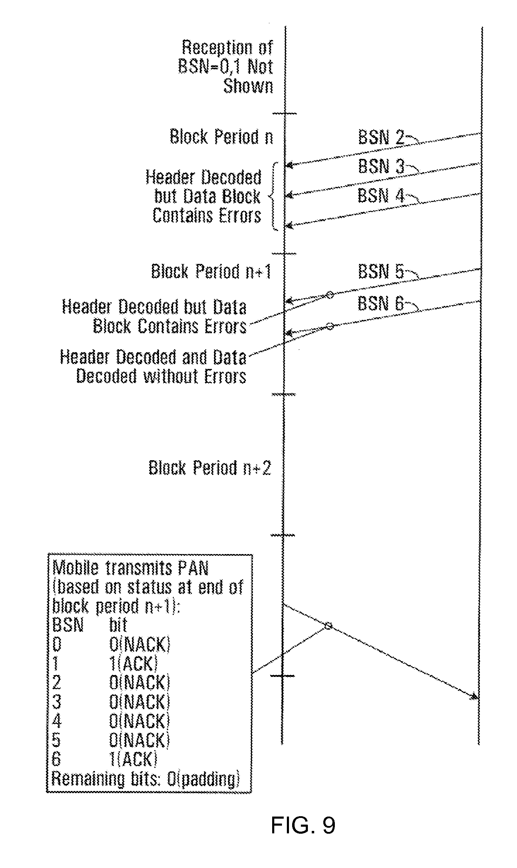

Figure 9 depicts an example of validation. Here, due to the inclusion of a "1" in respect of radio block 6, the network knows that the mobile station received block 6 during block period n+1; the only way the mobile station could indicate an ACK for that block is if it was taking into account blocks received during radio block period n+1; therefore the network knows that the 0 bit corresponding to BSN 5 must be a NACK, not a padding bit.

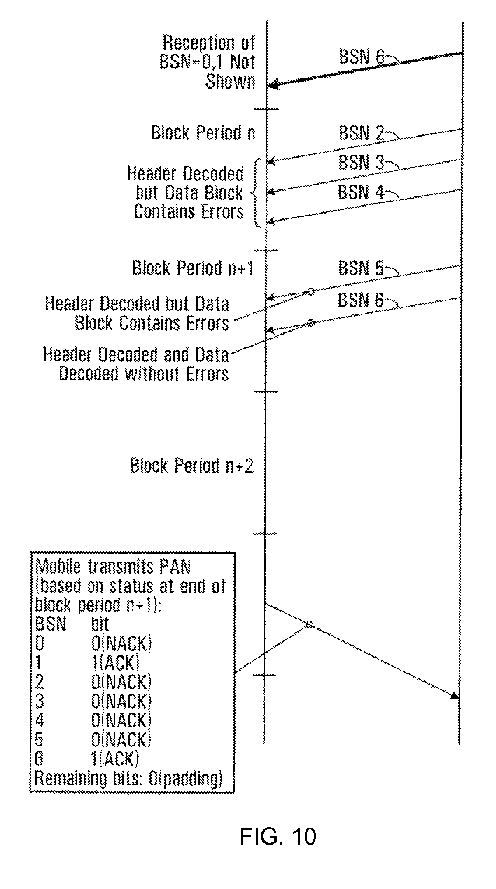

Figure 10 shows an example of where the network is unable to validate. Here, the network had sent block 6 earlier (say in block period n-1). In this case, the mobile station could be ACK'ing block 6 based on the copy received in block period n-1, therefore the network cannot determine whether the mobile station is taking into account blocks received in period n+1.

However, if the mobile station had previously (unambiguously) NACK'ed the first transmission of block 6 so that the network is aware that the transmission of block 6 in period n-1 was unsuccessful, then the ACK in the PAN must correspond to the transmission in period n+1 and other indications for that block period can be validated.

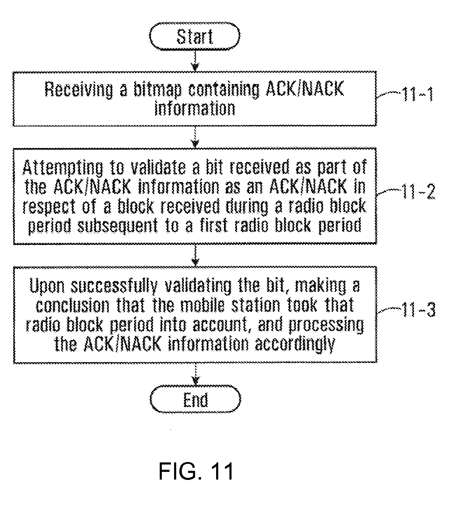

A method for execution in a network, for example by one or more network components, will now be described with reference to Figure 11. The method begins at block 11-1 with receiving a bitmap containing ACK/NACK information. The method continues in block 11-2 with attempting to validate a bit received as part of the ACK/NACK information as an ACK/NACK in respect of a block received during a radio block period subsequent to a first radio block period. The method continues in block 11-3 with upon successfully validating the bit, making a conclusion that the mobile station took that radio block period into account, and processing the ACK/NACK information accordingly.

**Determine Mobile station capability based on validation**

In this solution, the mobile station is mandated to apply the same behavior consistently over a period of time (e.g. throughout a TBF, or from the receipt of one assignment message that modified assigned resources to the next assignment message that modifies assigned resources). Initially, the network assumes that the mobile station is not taking into account those transmissions received during the questionable radio block period(s).

If any questionable radio block period is validated (for example as described above under the heading "Validate" information relating to questionable radio block periods", then the network stores that information and considers all corresponding future questionable blocks to have been validated.

For example, the network may determine as a result of receiving a particular PAN that the mobile station takes into account blocks received during radio block period n+1; then all subsequent block periods "n+1" are considered to be taken into account by the mobile station; i.e. on an ongoing basis, the PAN takes account of blocks received during the radio block period within with the poll was transmitted, and the following radio block period.

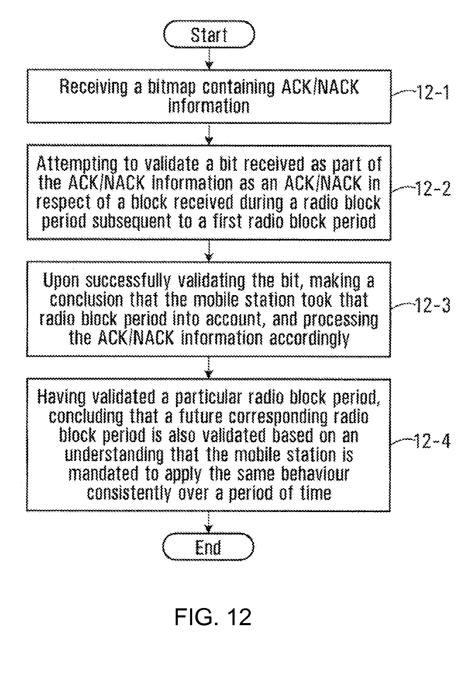

A method for execution by a network, for example by one or more network devices, will now be described with reference to Figure 12. The method begins at block 12-1 with receiving a bitmap containing ACK/NACK information. The method continues in block 12-2 with attempting to validate a bit received as part of the ACK/NACK information as an ACK/NACK in respect of a block received during a radio block period subsequent to a first radio block period. The method continues in block 12-3 with upon successfully validating the bit, making a conclusion that the mobile station took that radio block period into account, and processing the ACK/NACK information accordingly. The method continues in block 12-4 with having validated a particular radio block period, concluding that a future corresponding radio block period is also validated based on an understanding that the mobile station is mandated to apply the same behavior consistently over a period of time.

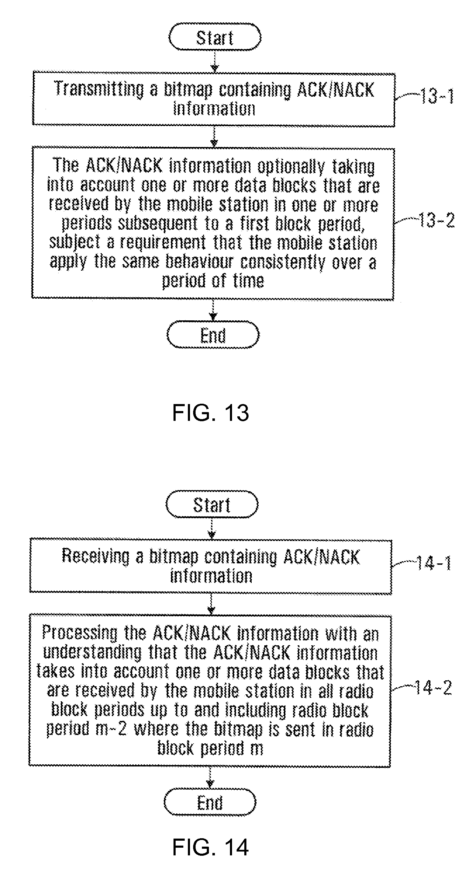

A corresponding method for execution by a mobile device will now be described with reference to Figure 13. The method begins in block 13-1 with transmitting a bitmap containing ACK/NACK information. The method continues in block 13-2 with the ACK/NACK information optionally taking into account one or more data blocks that are received by the mobile station in one or more periods subsequent to a first block period, subject a requirement that the mobile station apply the same behavior consistently over a period of time.

**Reduce the permitted "questionable" blocks in event-based PAN.**

In some embodiments, for event-based PANs the mobile station is configured to take into account all radio block periods up to and including radio block period m-2 where the PAN is sent in radio block period m.

A method for execution in a network, for example for one or more network components, will now be described with reference to Figure 14. The method begins in block 14-1 with receiving a bitmap containing ACK/NACK information. The method continues in block 14-2 with processing the ACK/NACK information with an understanding that the ACK/NACK information takes into account one or more data blocks that are received by the mobile station in all radio block periods up to and including radio block period m-2 where the bitmap is sent in radio block period m.

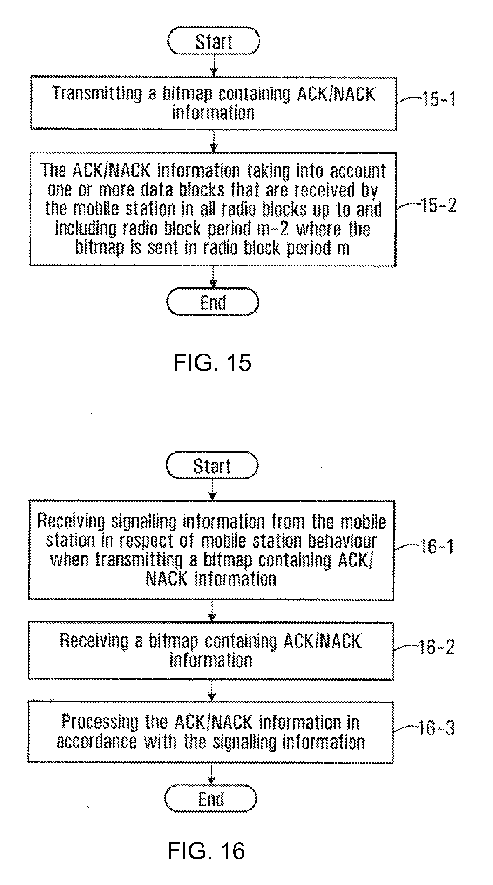

A corresponding method for execution by a mobile device will now be described with reference to Figure 15. The method begins in block 15-1 with transmitting a bitmap containing ACK/NACK information. The method continues in block 15-2 with the ACK/NACK information taking into account one or more data blocks that are received by the mobile station in all radio blocks up to and including radio block period m-2 where the bitmap is sent in radio block period m.

**Signal mobile station capability**

In some embodiments, rather than have the network make a determination, for example based on the 'validation' solutions described above, the mobile station signals its capability (in terms of reaction time and/or which block periods it considers when reporting PANs). Although this would require additional signalling, it would simplify network implementation and avoid any ambiguity. The network then takes the signalling into account, and processes received PAN information accordingly.

Signaling could be by means of the MS Radio Access Capabilities IE (see 3GPP TS 24.008), or within RLC/MAC control blocks, such as the EGPRS Packet Downlink ACK/NACK control message. This may, for example, be sent in various messages. Specific examples include an ATTACH REQUEST message, ROUTING AREA UPDATE message, etc. - these messages are defined in 24.008.

A method for execution by a network, for example by one or more network components, will now be described with reference to Figure 16. The method begins in block 16-1 with receiving signaling information from the mobile station in respect of mobile station behavior when transmitting a bitmap containing ACK/NACK information. The method continues in block 16-2 with receiving a bitmap containing ACK/NACK information. The method continues in block 16-3 with processing the ACK/NACK information in accordance with the signaling information.

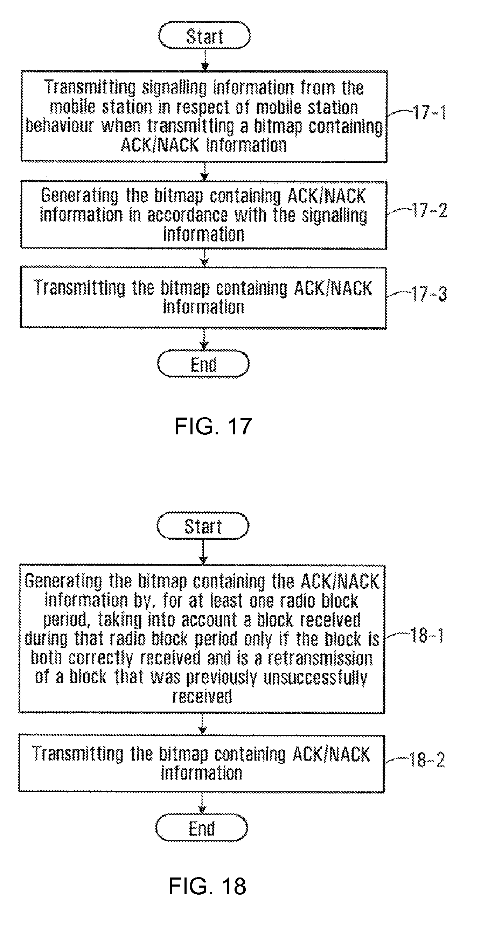

A corresponding method for execution by a mobile device will now be described with reference to Figure 17. The method begins in block 17-1 with transmitting signaling information from the mobile station in respect of mobile station behavior when transmitting a bitmap containing ACK/NACK information. The method continues in block 17-2 with generating the bitmap containing ACK/NACK information in accordance with the signaling information. The method continues in block 17-3 with transmitting the bitmap containing ACK/NACK information.

**Signal network capability or expectation**

In some embodiments, to further minimize any misinterpretation of ACK/NACK information, the network signals to the mobile station how the mobile station is expected to report ACK/NACK information. In some embodiments, the network indicates that the mobile station shall behave in a specific manner, or that the mobile shall behave according to whatever capability the mobile signals to the network.

Explicit signaling may be, for example, by means of broadcast system information blocks (e.g. in the GPRS Cell Options IE see 3GPP TS 44.060) or in assignment messages (e.g. PACKET DOWNLINK ASSIGNMENT message, see 3GPP TS 44.060).

In some embodiments, the absence of any explicit signalling indicates that a mobile is to behave in a particular manner, for example, to not take into account any blocks received during questionable radio block periods

**Transmit ACKs for blocks received during Questionable Radio Block Periods**

In some embodiments, a mobile station which is otherwise not taking into account a particular radio block period (or at least, not required to take into account a particular radio block period), nevertheless takes into account a block correctly received during that radio block period if a previous transmission of that block was unsuccessfully received, and thereby, instead of reporting a NACK (corresponding to the earlier transmission(s)) reports an ACK for that block. Since the network is expecting a report for that block (because of the earlier transmission(s)) then it would process a NACK (and not, for example, consider a '0' bit as padding) and may retransmit the block. However, by replacing the NACK indication by an ACK indication, the network knows that no further transmission is necessary. For the functioning of the RLC protocol in general, it is not necessary that the mobile station identify which transmission(s) of a given block were correctly received and hence there is no problem in this case that the mobile station is reporting an ACK based on the reception of a block which the network would not have expected the mobile station to have taken into account when constructing the bitmap.

In some embodiments, this solution is applied regardless of any signalling received from the network indicating how the mobile should construct ACK/NACK bitmaps.

This solution has the benefit of minimizing unnecessary transmissions of blocks, including in particular pre-emptive retransmissions.

A flowchart of a method for execution by a mobile station will now be described with reference to Figure 18. The method begins in block 18-1 with generating the bitmap containing ACK/NACK information by, for at least one radio block period, taking into account a block received during that radio block period only if the block is both correctly received and is a retransmission of a block that was previously unsuccessfully received. The method continues in block 18-2 with transmitting the bitmap containing ACK/NACK information.

**Using Bits in PAN to Indicate Reporting Period**

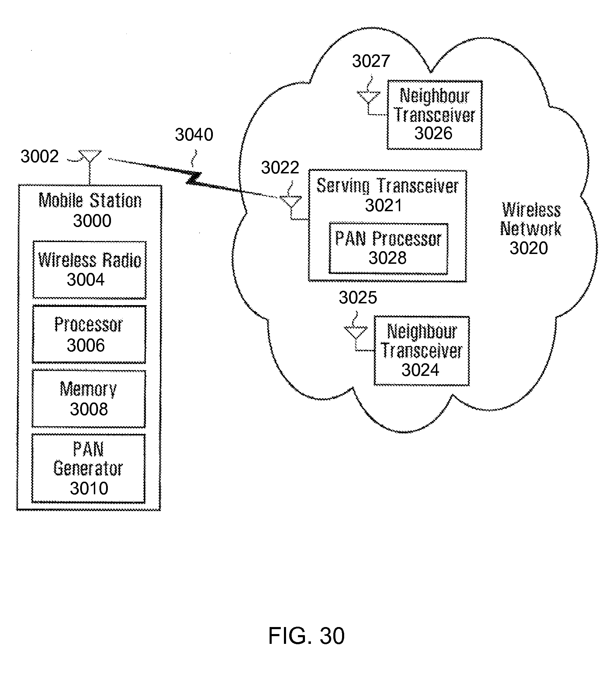

In an example implementation, a MS (e.g., the MS 3000 described below in conjunction with FIG. 30), is configured to transmit an indication of the extent of the period for which status of RLC blocks received by the MS 3000 are reported in the PAN (e.g., in response to a poll or in an event-based PAN). For example, if the MS 3000 receives a poll at time n:
i) BTTI: the MS is to send a response at time n+2, QBP is n+1, which consists of 4 TDMA frames and the MS 3000 will include blocks received through time n+1
ii) RTTI: the MS 3000 is to send a response at time n+3, the QBPs are n+1 and n+2, which consist of 4 TDMA frames and the MS will include blocks received through time n+2
In general, the QBPs may be defined relative to a time at which a trigger event occurs (e.g. detection of a missing block or reception of a poll) leading to the MS 3000 sending a PAN, relative to a time at which a PAN is sent, or both. Some block periods may be specified explicitly (or configured) to be always reported, or never reported and hence are these block periods are not QBPs.

The PAN according to the example implementation includes a bit to indicate whether or not the PAN includes reporting for RLC blocks received in the QBP(s). An indication, which may be included in any type of communication, may indicate that data blocks are accounted for in acknowledgment information, will be accounted for in acknowledgement information, were previously accounted for in acknowledgment information, etc. For example, the last bit of the PAN bitmap may be a zero to indicate that the PAN does not include reporting for the QBP and a one to indicate that the PAN includes reporting for the QBP.

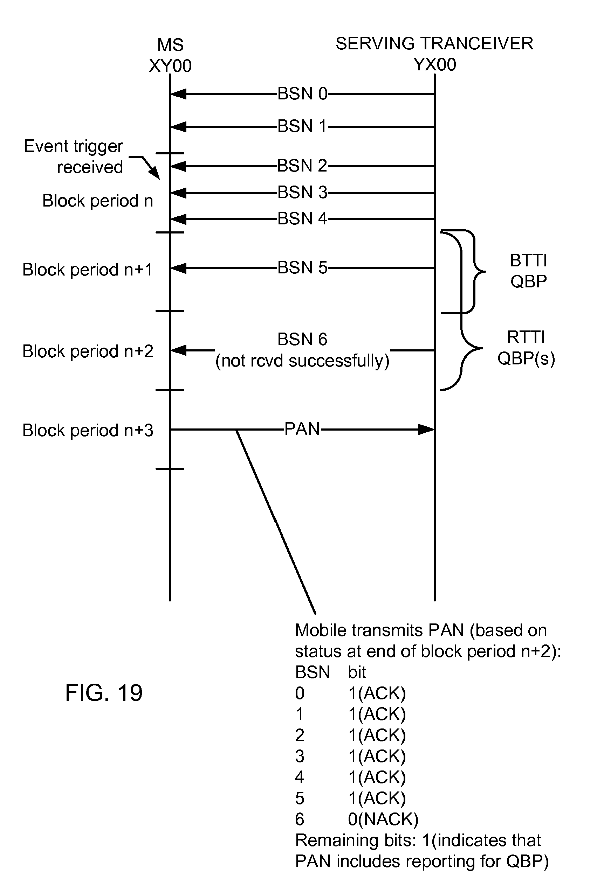

FIG. 19 is an illustration of an example message flow according to the example implementation. In the example message flow, the MS 3000 receives BSN 0 and 1 from a serving transceiver (e.g., the serving transceiver 3021 described in conjunction with FIG. 30) prior to block period n. The MS 3000 receives BSN 2, 3, and 4 during block period n. In addition, the MS 3000 receives a trigger event during block period n that causes the MS 3000 to send a PAN. For example, the trigger event may be a poll request sent by the serving transceiver 3021. According to the illustrated example, the MS 3000 must send the PAN during block period n+3. During block period n+1, the example MS 3000 receives BSN 5. During block period n+1, the example MS 3000 receives BSN 6. However, according to the illustrated example, BSN 6 is not successfully received. For example, only the header may have been received, only part of the message may have been received, etc. Accordingly, during block period n+3, the MS 3000 sends the PAN. The example PAN indicates that BSN 0-5 were successfully received by including a 1 ACK for each BSN in the PAN message. The example PAN indicates that BSN 6 was not successfully received by including a 0 (NACK). In addition, the MS 3000 sets the last bit of the PAN to one to indicate that the PAN includes reporting for the QBP (e.g., block n+1 for BTTI and blocks n+1 and n+2 for RTTI). While the example implementation indicates that the PAN includes reporting for the QBP (e.g., using a reporting blocks (REP_BLKS field), the last bit of the PAN could be set to zero to indicate that the PAN does not include reporting for the QBP.

While the example implementation utilizes the final bit of the PAN to indicate whether or not the PAN includes reporting for the QBP, in the example of FIG. 19 and in all implementations throughout this disclosure any bit(s) of the PAN could be used. For example, the first bit of the PAN could be set to zero to indicate that the PAN does not include reporting for the QBP and one to indicate that the PAN includes reporting for the QBP. In addition, the bit assignment could be modified so that a one indicates that the PAN does not include reporting for the QBP and a zero indicates that the PAN includes reporting for the QBP. When there are multiple QBPs (e.g. in the case of RTTI) a single bit may indicate that the PAN reports the status of blocks received during all or none of the QBPs. Alternatively, 2 or more bits may be used to indicate for which (if any) QBPs the status of received blocks is indicated. In addition, the indication regarding the QBP could be indicated by any type of indication such as, for example, inverting all bits of the TFI to indicate that reporting will be included for the QBP and not inverting the bits of the TFI to indicate that reporting will be included for the QBP. In another implementation, only some of the bits could be inverted or not inverted.

Table 1 illustrates an example format for a PAN that includes a REP_BLKS field in an RTTI configuration. Table 2 illustrates an example format for the REP_BLKS field of a PAN in RTTI configuration. In the example implementation, m is the block period during which the PAN is sent.

**Table 1: Piggy-backed Ack/Nack field (SSN-based, RTTI)**

| | Bit | | | | | | | | |
|---|---|---|---|---|---|---|---|---|---|
| | 8 | 7 | 6 | 5 | 4 | 3 | 2 | 1 | Octet |
| | ShortSSN | | | | | | | BOW | 1 |
| | RB | | | | ShortSSN / RB | | | | 2 |
| | TFI | | | | | REP_BLKS | RB | | 3 |
| | | | | | | | | TFI | 4 |
| | | | | | | | | | |

**Table 2: REP_BLKS format for PAN in RTTI configuration**

| **bit 21** | **Last Block period taken into account** | |
|---|---|---|
| | **Reserved block = N+6 or N+7 mod 2715648, or sent according to Event-based FANR rules** | **Reserved block = N+8 or N+9 mod 2715648** |
| 0 0 | Reserved (interpreted as 0 0 if received) | m-4 |
| 1 1 | m-2 | m-2 |
| 0 0 | m-1 | m-1 |
| 11 | m-3 | m-3 |

Table 3 illustrates an example format for a PAN that includes a REP_BLKS field in a BTTI configuration. Table 4 illustrates an example format for the REP_BLKS field of a PAN in RTTI configuration. In the example implementation, m is the block period during which the PAN is sent.

**Table 3: Piggy-backed Ack/Nack field (SSN-based, BTTI)**

| | Bit | | | | | | | | |
|---|---|---|---|---|---|---|---|---|---|
| | 8 | 7 | 6 | 5 | 4 | 3 | 2 | 1 | Octet |
| | ShortSSN | | | | | | | BOW | 1 |
| | RB | | | | ShortSSN / RB | | | | 2 |
| | TFI | | | | REP_BLKS | RB | | | 3 |
| | | | | | | | | TFI | 4 |
| | | | | | | | | | |

**Table 4: REP_BLKS format for PAN in BTTI configuration**

| **bit** | **Last Block period taken into account** | |
|---|---|---|
| | **Reserved block = N+8 or N+9 mod 2715648, or sent according to Event-based FANR rules** | **Reserved block = N+13 mod 2715648** |
| 0 | m-2 | m-3 |
| 1 | m-1 | m-1 |

In other implementations, the REP_BLKS field may be sent in an EGPRS PACKET DOWNLINK ACK/NACK or any other communication that is not a PAN. For example, a REP_BLKS_PDAN field may be included in a communication. The REP_BLKS_PDAN field indicates which radio block periods have been taken into account when constructing a bitmap for a communication. An example format for the REP_BLKS_PDAN field is shown in Table 5.1. If it is specified that the bitmap is to be sent due to both the reception of a poll and the event-based FANR rules, the coding for event-based FANR applies. If not present, the receiver shall assume that the bitmap has been constructed taking into account the minimum radio block periods permitted (e.g., according to sub-clause 9.1.8.2.3 of 3GPP TS 44.060). Table 5.2 illustrates an example layout of an EGPRS PACKET DOWNLINK ACK/NACK TYPE 2 information element.

**Table 5.1: REP_BLKS_PDAN format**

| Bit | |
|---|---|
| 2 1 | |
| 0 0 | m-4 |
| 0 1 | m-3 |
| 1 0 | m-2 |
| 1 1 | m-1 |

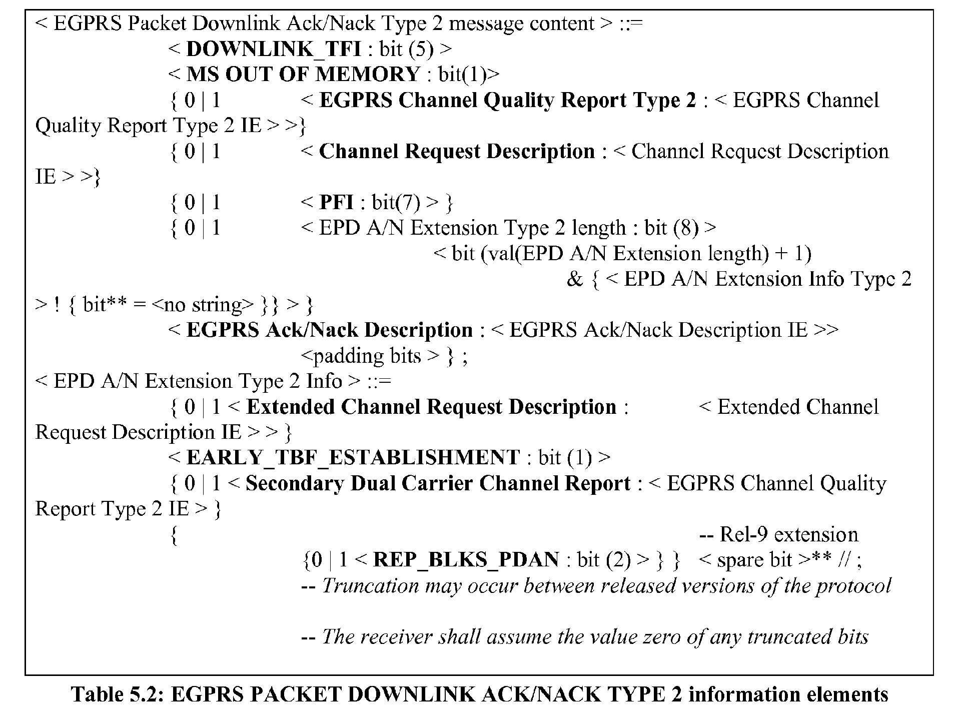

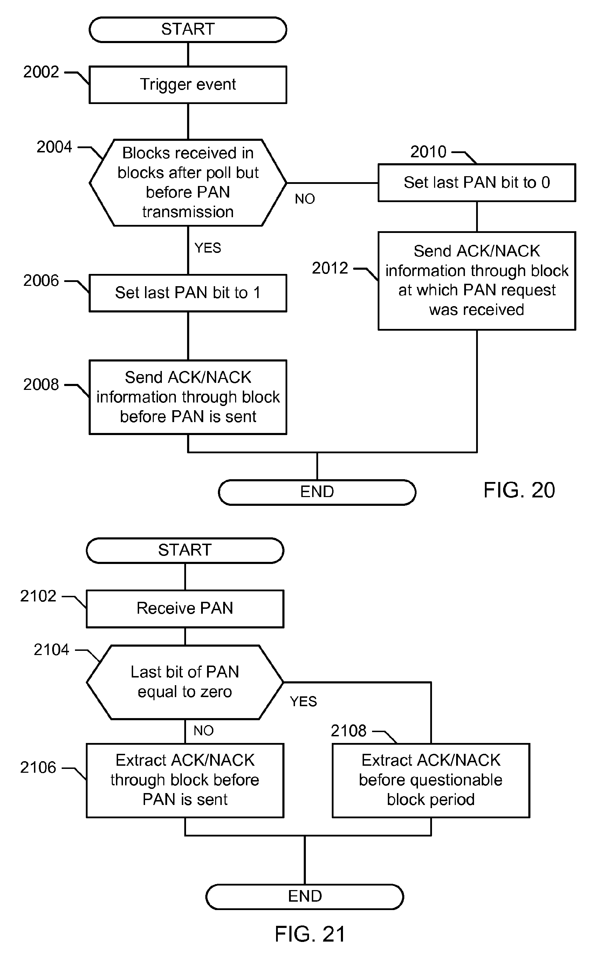

FIG. 20 is a flowchart of an example process to transmit the PAN from a MS (e.g., MS 3000). The process of FIG. 20 begins when a trigger event occurs that will cause the MS 3000 to transmit a PAN (block 2002). For example, the MS 3000 may be triggered by a received poll request or any other event. The MS 3000 then determines if the PAN will report the status of RLC blocks received after the trigger but before the PAN transmission (e.g., in the QBP) (block 2004). For example, the MS 3000 determines that blocks received at time n+2 and/or n+1 in the example of FIG. 19 will be reported in the PAN. In this case, the MS 3000 sets the last bit of the PAN to 1 (block 2006). The MS 3000 then sends ACK/NACK information for blocks received through the block prior to sending the PAN (e.g., n+2 in FIG. 19). The process of FIG. 20 is then completed.

When the MS 3000 will not report the status of blocks received during the QBP (block 2004), the MS 3000 sets the last bit of the PAN to 0 to indicate that the PAN will not include reporting for blocks in the QBP (block 2010). The MS 3000 then sends ACK/NACK information for blocks received prior to the QBP (e.g., through block n). The process of FIG. 20 is then completed.

FIG. 21 is a flowchart of an example process to receive a PAN from an MS (e.g., the MS 3000) at a serving transceiver (e.g., the serving transceiver 3021). The example process of FIG. 21 begins when the serving transceiver 3021 receives a PAN (block 2102). The serving transceiver 3021 determines if the final bit of the PAN is set to zero (block 2104). When the final bit of the PAN is not set to zero (e.g., is set to one), the serving transceiver 3021 extracts ACK/NACK information and decodes it on that basis that it reports the status of blocks received by the MS 3000 through the block period prior to the PAN being received (e.g., block received since the lack ACK/NACK transmission through n+2 in the example of FIG. 19) (block 2106). In other words, the serving transceiver 3021 recognizes that the MS 3000 is reporting information for RLC blocks that were received during the QBP. The process of FIG. 21 is then completed.

When the final bit of the PAN is set to zero (block 2104), the serving transceiver 3021 extracts ACK/NACK information up to the questionable block period (e.g., n+1 in BTTI and n in RTTI) (block 2108). In other words, the serving transceiver 3021 recognizes that the MS 3000 is not reporting information for RLC blocks that were received during the QBP. The serving transceiver 3021 can recognize that bits that would correspond to RLC blocks received during the QBP do not indicate whether such blocks were received. For example, the serving transceiver 3021 may recognize the bits as padding. The process of FIG. 21 is then completed.

While the foregoing description ends with the extraction of the ACK/NACK information in blocks 2106 and 2108, additional processes may be performed to process the received information. For example, the serving transceiver 3021 may compare the received information with information about radio blocks that were sent to the MS 3000 by the serving transceiver 3021. The comparison may indicate which, if any, blocks may need to be retransmitted. For example, the serving transceiver 3021 may retransmit blocks that were indicated to have not been successfully received by a NACK response from the MS 3000. Because the serving transceiver 3021 will know whether a bit in the PAN that is a zero is indicative of a NACK or is a padding bit, the serving transceiver 3021 will know when a block must be retransmitted because it wasn't received and when a block does not need to be retransmitted because, for example, the MS 3000 was not reporting on the period during which the block was received and padding bits were included.

While not illustrated in FIGS. 19-21, the serving transceiver 3021 may signal to the MS 3000 that the serving transceiver 3021 supports reception of the QBP indication as part of the PAN. Accordingly, an MS 3000 that supports use of the PAN for QBP reporting indication may send the PAN as described in conjunction FIG. 20 when the serving transceiver 3021 indicates that it supports such indications and may use other ACK/NACK reporting when the serving transceiver 3021 does not indicate support. When the MS 3000 does not support use of the PAN for QBP reporting indicawtion, the MS 3000 may ignore the indication of support from the serving transceiver 3021 and may send the PAN as previously known (e.g., by setting the last bit or the last two bits of the PAN to 0).

**Using UL TFI in PAN to Indicate Reporting Period**

In an example implementation, a MS (e.g., the MS 3000 described in conjunction with FIG. 30), is configured to transmit the status of all RLC blocks received until the MS 3000 is to return the PAN (e.g., in response to a poll or in an event-based PAN). For example, if the MS 3000 receives a poll at time n and is to send a response at time n+1:
iii) BTTI: the QBP is n+2, which consists of 4 TDMA frames and the MS 3000 will include blocks received through time n+1
iv) RTTI: the QBP is n+1 and n+2, which consist of 4 TDMA frames and the MS will include blocks received through time n+2

According to 3GPP TS 44.060 § 10.3a.5, when starting sequence number (SSN)-based encoding is used (see 3GPP TS 44.060 § 9.1.14.1), the PAN field consists of a beginning of window (BOW), a short starting sequence number (ShortSSN), a reported bitmap (RB) and a temporary flow identifier (TFI) fields. In the downlink direction, the TFI field shall always include a valid value. In the uplink direction, the TFI field shall include a valid value only if multiple TBF (MTBF) procedures are supported by both the network and the mobile station; in all other cases, the bits of the TFI field shall be set to '0'. The length of the PAN field is 25 bits. The size of the ShortSSN field varies between 7 and 11 bits as defined in 3GPP TS 44.060 § 10.4.23.

Table 6 illustrates an example format for a PAN field according to 3GPP TS 44.060.

**Table 6: Piggy-Backed Ack/Nack Field**

| | Bit | | | | | | | | |
|---|---|---|---|---|---|---|---|---|---|
| | 8 | 7 | 6 | 5 | 4 | 3 | 2 | 1 | Octet |
| | ShortSSN | | | | | | | BOW | 1 |
| | RB | | | | ShortSSN / RB | | | | 2 |
| | TFI | | | | RB | | | | 3 |
| | | | | | | | | TFI | 4 |
| | | | | | | | | | |

In an example implementation, the TFI fields of the example PAN field shown in Table 6 are used to indicate the reporting period and provide additional reporting information as shown in Table 7.

**Table 7: Piggy-Backed Ack/Nack Field**

| | Bit | | | | | | | | |
|---|---|---|---|---|---|---|---|---|---|
| | 8 | 7 | 6 | 5 | 4 | 3 | 2 | 1 | Octet |
| | ShortSSN | | | | | | | BOW | 1 |
| | RB | | | | ShortSSN / RB | | | | 2 |
| | RB | | | | RB | | | | 3 |
| | | | | | | | | QBP | 4 |
| | | | | | | | | | |

In the example implementation, bit 1 of octet 4 is set to zero by the MS 3000 to indicate that reporting for block(s) in the QBP is not included in the PAN and is set to one to indicate that reporting for block(s) in the QBP is included in the PAN. In addition, according to the illustrated example, bits 5, 6, 7, and 8 of octet 3 are be used to reporting addition ACK/NACK information for radio blocks. However, any implementation may be use combination of the QBP bit and additional radio block bits. For example, only the QBP bit may be added to the TFI bits, only the additional radio block bits may be added to the TFI bits, two QBP bits and three radio block bits may be included, or any other combination may be used. Of course, any other agreed-upon bits may be selected for reporting.

The foregoing example may be used any time the MS 3000 does not use the TFI fields. For example, the MS 3000 may not use the TFI field when the MS 3000 does not support multiple TBF procedures. The serving transceiver 3021 may be informed of the MS 3000 support for MTBF from the MS Radio Access Capabilities message. In another example, the PAN of table 7 may be used when the MS 3000 does not use EMST. The serving transceiver 3021 may be informed of the MS 3000 support for EMST from the MS Radio Access Capabilities message.

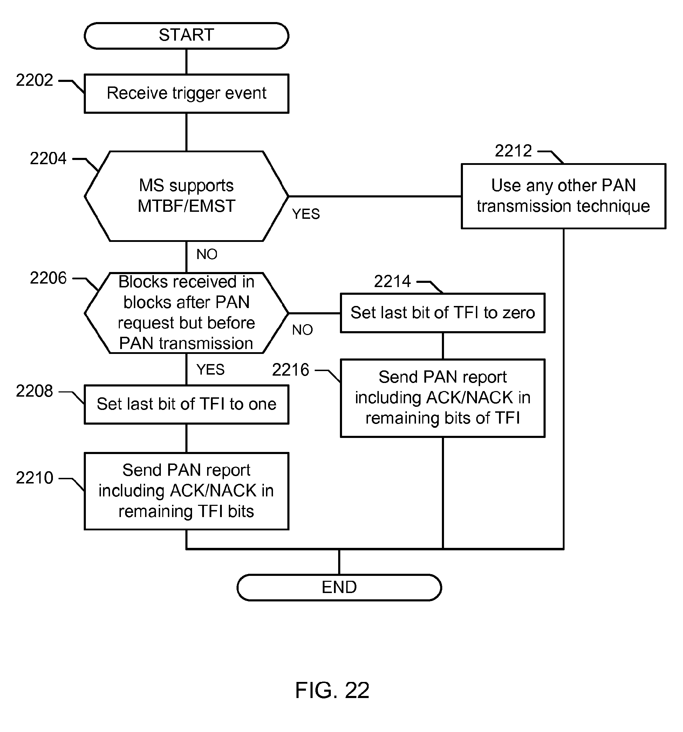

FIG. 22 is a flowchart of an example process to send a PAN according to table 7 from a MS (e.g., the MS 3000). The example process of FIG. 22 begins when a trigger event occurs that will case the MS 3000 to transmit a PAN (block 2202). The MS 3000 determines if the MS 3000 supports MTBF and/or EMST (block 2204). When the MS 3000 does not support MTBF and/or EMST, the MS 3000 determines if the PAN will report the status of RLC block received after the trigger but before the PAN transmission (e.g., in the QBP) (block 2206). When the PAN will include blocks received in the QBP, the MS 3000 sets the last (or any agreed-upon bit) TFI bit of the PAN to one (or any agreed-upon value) to indicate that the PAN will include reporting for blocks received during the QBP (block 2208). The MS 3000 sends the PAN and includes four additional ACK/NACK reporting bits in the remaining four TFI bits (e.g., bits 5, 6, 7, and 8 of octet 3) (block 2210). The process of FIG. 22 is then completed.

When the MS 3000 will not report the status of blocks received during the QBP (block 2206), the MS 3000 sets the last TFI bit to zero to indicate that the PAN will not include reporting for bits during the QBP (block 2214). The MS 3000 sends the PAN and includes four additional ACK/NACK reporting bits in the remaining four TFI bits (e.g., bits 5, 6, 7, and 8 of octet 3) (block 2216). The process of FIG. 22 is then completed.

When the MS 3000 supports MTBF and/or EMST (block 2204), the MS 3000 uses any other available PAN transmission technique (block 2212). For example, the MS 3000 may use the PAN format illustrated in table 6 or any other PAN transmission technique described herein or otherwise known. The process of FIG. 22 is then completed.

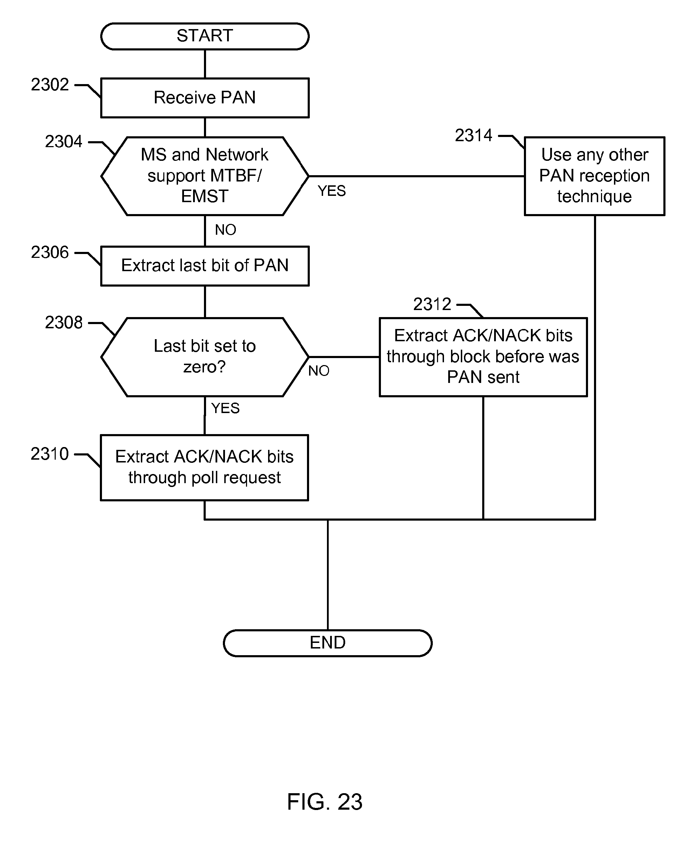

FIG. 23 is a flowchart of an example process to receive a PAN at a serving transceiver (e.g., the serving transceiver 3021) sent according to the process illustrated in FIG. 22. The process of FIG. 23 begins when the serving transceiver 3021 receives a PAN from the mobile station 3000 (block 2302). The serving transceiver 3021 determines if the mobile station 3000 and the communication network support MTBF and/or EMST (block 2304). When the MS 3000 and the communication network do not support MTBF and/or EMST, the serving transceiver 3021 extracts the last TFI bit of the PAN (block 2306). The serving transceiver 3021 then determines if the last bit is set to zero (block 2308). When the last TFI bit of the PAN is set to zero, the serving transceiver 3021 extracts ACK/NACK information and decodes it on the basis that it reports the status of blocks received by the MS 3000 until the block period when the poll request was received at the MS 3000 (block 2310). The process of FIG. 23 is then completed.

When the last TFI bit of the PAN is not set to zero (e.g., is set to one) (block 2308), the serving transceiver 3021 extracts the ACK/NACK ifnromation and decodes it on the basis that it reports the status of blocks received by the MS 3000 through the block period before the PAN was sent (e.g., including the QBP) (block 2312). The process of FIG. 23 is then completed.

When the MS 3000 and/or the communication network support MTBF and/or EMST (block 2304), the serving transceiver 3021 uses any other PAN reception technique available and agreed upon with the mobile station (block 2314). For example, the serving transceiver 3021 may receive a PAN formatted according to table 6 and/or any other PAN format described herein or otherwise known. The process of FIG. 23 is then completed.

While the foregoing description ends with the extraction of the ACK/NACK information in blocks 2310 and 2314, additional processes may be performed to process the received information. For example, the serving transceiver 3021 may compare the received information with information about radio blocks that were sent to the MS 3000 by the serving transceiver 3021. The comparison may indicate which, if any, blocks may need to be retransmitted. For example, the serving transceiver 3021 may retransmit blocks that were indicated to have not been successfully received by a NACK response from the MS 3000. Because the serving transceiver 3021 will know whether a bit in the PAN that is a zero is indicative of a NACK or is a padding bit, the serving transceiver 3021 will know when a block must be retransmitted because it wasn't received and when a block does not need to be retransmitted because, for example, the MS 3000 was not reporting on the period during which the block was received and padding bits were included.

In another example implementation, when a MS 3000 and/or a communication network support MTBF and/or EMST (e.g., block 2204 of FIG. 22 and block 2304 of FIG. 23), some of the bits of the UL TFI may be used even though some of the bits are used for the TFI identification. For example, when only two bits are used for TFI identification (e.g., when there may be a maximum of 4 TFIs) as shown in Table 8, the TFI may be allocated to only use the two bits and a one bit QBP identification and a two bit radio block reporting may be included in the bits assigned for TFI identification (see Table 6). Alternatively, when three TFI bits are used (e.g., when there is a maximum of 8 TFIs that must be identified), a one bit QBP identification and a one bit radio block reporting may be included in the bits assigned for TFI identification (see Table 6). Of course, any combination of TFI, QBP, and RB bits may be used. In addition, the MS 3000 and the serving transceiver 3021 may dynamically allocate and use the bits. For example, the MS 3000 may determine the number of TFIs that are in use or possible immediately prior to transmitting the PAN and may allocate the bits based on the current availability. In addition, the serving transceiver 3021 may also determine the number of TFIs that are in use or possible at the time that the PAN is received to determine how the MS 3000 has allocated the bits.

**Table 8: Piggy-Backed Ack/Nack Field**

| | Bit | | | | | | | | |
|---|---|---|---|---|---|---|---|---|---|
| | 8 | 7 | 6 | 5 | 4 | 3 | 2 | 1 | Octet |
| | ShortSSN | | | | | | | BOW | 1 |
| | RB | | | | ShortSSN / RB | | | | 2 |
| | TFI | QBP | | RB | RB | | | | 3 |
| | | | | | | | | TFI | 4 |
| | | | | | | | | | |

**Table 9: Piggy-Backed Ack/Nack Field**

| | Bit | | | | | | | | |
|---|---|---|---|---|---|---|---|---|---|
| | 8 | 7 | 6 | 5 | 4 | 3 | 2 | 1 | Octet |
| | ShortSSN | | | | | | | BOW | 1 |
| | RB | | | | ShortSSN / RB | | | | 2 |
| | TFI | | QBP | RB | RB | | | | 3 |
| | | | | | | | | TFI | 4 |
| | | | | | | | | | |

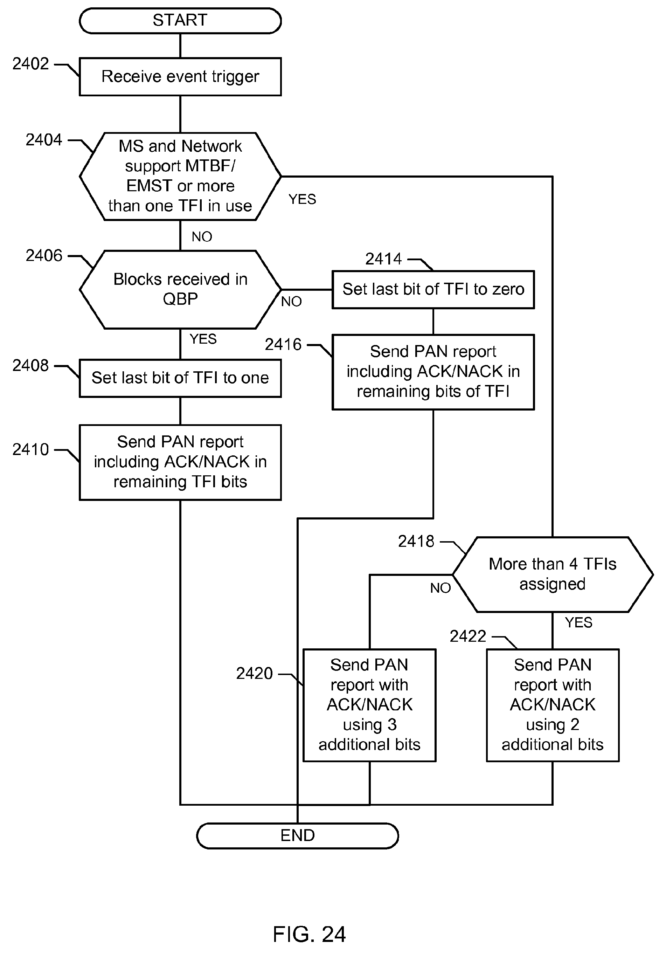

FIG. 24 is a flowchart of an example process that may be implemented by the MS 3000 to transmit a PAN. The example process begins when a trigger event occurs that will cause the MS 3000 to transmit a PAN (block 3002). The MS 3000 determines whether or not the MS 3000 and the communication network support MTBF/EMST and/or whether more than one TFI is in use (block 2404). When, the MS 3000 and the communication network do not support MTBF/EMST or no more than one TFI is in use, the MS 3000 determines if the PAN will report the status of RLC blocks received in the QBP following the trigger event (block 2406). When the MS 3000 will report the status of blocks received in the QBP, the MS 3000 sets the last TFI bit to one (see Table 7) to indicate that the MS 3000 is reporting blocks received during the QBP (block 2408). The MS 3000 then sends a PAN report including ACK/NACK information in the remaining TFI bits (e.g., the four bits illustrated in table 7) (block 2410). The process of FIG. 24 is then completed.

When the MS 3000 will not report the status of blocks received in the QBP (block 2406), the MS 3000 sets the last bit of the TFI to zero (block 2414). The MS 3000 then sends a PAN report including ACK/NACK information in the remaining TFI bits (e.g., the four bits illustrated in table 7) (block 2416). The process of FIG. 24 is then completed.

When the MS 3000 and/or the communication network support MTBF/EMST and/or more than one TFI is in use (block 2404), the MS 3000 determines if more than 4 TFIs are assigned (block 2418). When four or fewer TFIs are assigned, the MS 3000 sends the PAN report using three of the TFI bits for the QBP and the radio block reporting (block 2420). For example, the MS 3000 may use the format of table 8 and provide a QBP bit indicating whether or not reporting for the QBP is included (e.g., as described in conjunction with blocks 2406-2416) and include two additional radio block reporting bits. The process of FIG. 24 is the completed.

When more than four TFIs are assigned (block 2418), the MS 3000 sends the PAN report using two of the TFI bits for the QBP and the radio block reporting (block 2420). For example, the MS 3000 may use the format of table 9 and provide a QBP bit indicating whether or not reporting for the QBP is included (e.g., as described in conjunction with blocks 2406-2416) and include one additional radio block reporting bit. The process of FIG. 24 is the completed.

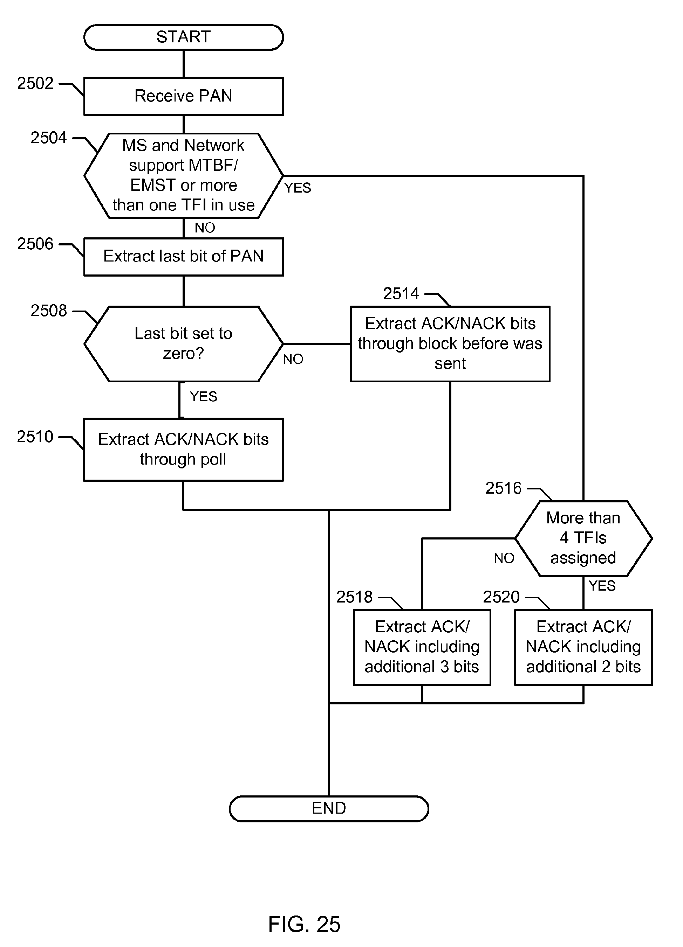

FIG. 25 is a flowchart of an example process to receive a PAN sent in accordance with FIG. 24 at a serving transceiver 3021. The process of FIG. 25 begins when the serving transceiver 3021 receives a PAN from the MS 3000 (block 2502). The serving transceiver determines if the MS 3000 and/or the communication network supports MTBF/EMST and/or if more than one TFI is in use (block 2504). When the MS and the communication network do not support MTBF/EMST and no more than one TFI is in use, the serving transceiver 3021 extracts the last TFI bit of the PAN (block 2506). The serving transceiver 3021 determines if the last TFI bit is set to zero (block 2508). When the last TFI bit is set to zero, the serving transceiver extracts the ACK/NACK information and decodes it on the basis that it reports the status of blocks received by the MS 3000 until the trigger event was received by the MS 3000 (block 2510). The process of FIG. 25 is then completed.

When the last TFI bit is not set to zero (e.g., the last TFI bit is set to one) (block 2508), the serving transceiver 3021 extracts the ACK/NACK information and decodes it on the basis that it reports the status of blocks received by the MS 3000 until the end of the QBP (block 2514). The process of FIG. 25 is then completed.

When the MS 3000 and/or the communication network support MTBF and/or EMST and/or more than on TFI is in use (block 2504), the serving transceiver 3021 determines if more than 4 TFIs are assigned to the MS 3000 (block 2516). When four or fewer TFIs are assigned, the serving transceiver 3021 extracts QBP information and ACK/NACK information including ACK/NACK information in two of the TFI bits (block 2518). For example, the serving transceiver 3021 may extract the information according to the format of table 8 to extract a QBP bit indicating whether or not reporting for the QBP is included (e.g., as described in conjunction with blocks 2508-2514) and two additional radio block reporting bits. The process of FIG. 25 is the completed.

When more than four TFIs are assigned (block 2516), the serving transceiver 3021 extracts the QBP information and ACK/NACK information including ACK/NACK information in one of the TFI bits (block 2520). For example, the serving transceiver 3021 may extract the information in accordance with the format of table 9 to extract a QBP bit indicating whether or not reporting for the QBP is included (e.g., as described in conjunction with blocks 2508-2514) and to extract one additional radio block reporting bit. The process of FIG. 25 is the completed.

While the foregoing description ends with the extraction of the ACK/NACK information in blocks 2510, 2514, 2518, and 2520, additional processes may be performed to process the received information. For example, the serving transceiver 3021 may compare the received information with information about radio blocks that were sent to the MS 3000 by the serving transceiver 3021. The comparison may indicate which, if any, blocks may need to be retransmitted. For example, the serving transceiver 3021 may retransmit blocks that were indicated to have not been successfully received by a NACK response from the MS 3000. Because the serving transceiver 3021 will know whether a bit in the PAN that is a zero is indicative of a NACK or is a padding bit, the serving transceiver 3021 will know when a block must be retransmitted because it wasn't received and when a block does not need to be retransmitted because, for example, the MS 3000 was not reporting on the period during which the block was received and padding bits were included.

While not illustrated in FIGS. 22-25, the serving transceiver 3021 may signal to the MS 3000 that the serving transceiver 3021 supports reception of the QBP indication and/or radio blocks in the TFI. Accordingly, an MS 3000 that supports use of the TFI field for reporting may send the PAN as described in conjunction FIGS. 22 and/or 23 when the serving transceiver 3021 indicates that it supports such indications and may use other ACK/NACK reporting when the serving transceiver 3021 does not indicate support. When the MS 3000 does not support use of the TFI field for reporting, the MS 3000 may ignore the indication of support from the serving transceiver 3021 and may send the TFI as previously known (e.g., by using TFI=00000). In addition, because the MS 3000 and the serving transceiver 3021 may be implemented according to any standard version (e.g., Rel-7, Rel-9, etc.) the embodiments described herein may be implemented so that devices implemented according to different versions do not send messages that may be misinterpreted. For example, a TFI=00000 could have the same meaning in all versions. Of course, when messages will be ignored, do not conflict, or for any other reason, messages may be implemented such that they will have different meanings in different versions.

While the example implementations described in conjunction with FIGS. 21-25 describe particular bits and formats for PAN messages, any bits and/or formats could alternatively used. For example, bits could be set to particular values, bits could be inverted, bits could be rearranged, etc.

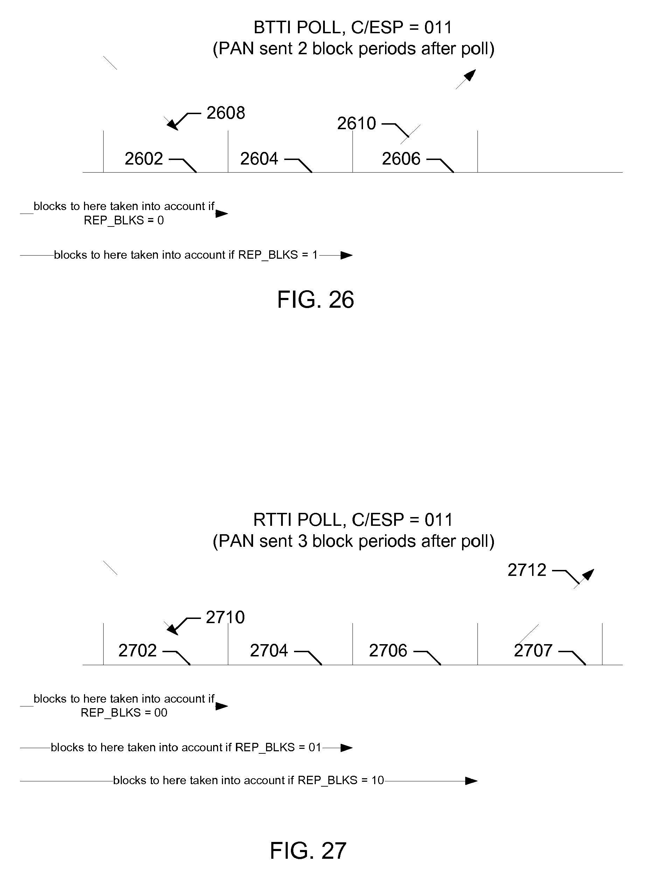

FIGS. 26-29 are block timelines that illustrate how QBP indications (REP_BLKS indications) may indicate the period for which reporting of blocks is provided.

FIG. 26 is a block timeline for a system that uses BTTI and sends PAN responses 2 block periods after a poll or event. The timeline consists of block periods 2602-2606. In block period 2602, an MS (e.g., MS 3000) receives a poll request 2608. Alternatively, the MS 3000 may receive an event-based FANR such as a missing block detection. When sending PAN response 2610, as described in the conjunction with FIGS. 19-25, the MS 3000 will indicate which block periods have been taken into account using the REP_BLKS indication. According to the illustrated example, the MS 3000 will set the REP_BLKS indication to zero to indicate that the MS 3000 has taken into account block periods through block period 2602. Alternatively, the MS 3000 will set the REP_BLKS indication to one to indicate that the MS 3000 has taken into account block periods through block period 2604.

FIG. 27 is a block timeline for a system that uses RTTI and sends PAN responses 3 block periods after a poll or event. The timeline consists of block periods 2702-2707. In block period 2702, an MS (e.g., MS 3000) receives a poll request 2710. Alternatively, the MS 3000 may receive an event-based FANR such as a missing block detection. When sending PAN response 2712, as described in the conjunction with FIGS. 19-25, the MS 3000 will indicate which block periods have been taken into account using the REP_BLKS indication. According to the illustrated example, the MS 3000 will set the two bit REP_BLKS indication to 00 to indicate that the MS 3000 has taken into account block periods through block period 2702. Alternatively, the MS 3000 will set the REP_BLKS indication to 01 to indicate that the MS 3000 has taken into account block periods through block period 2704. Alternatively, the MS 3000 will set the REP_BLKS indication to 10 to indicate that the MS 3000 has taken into account block periods through block period 2706.

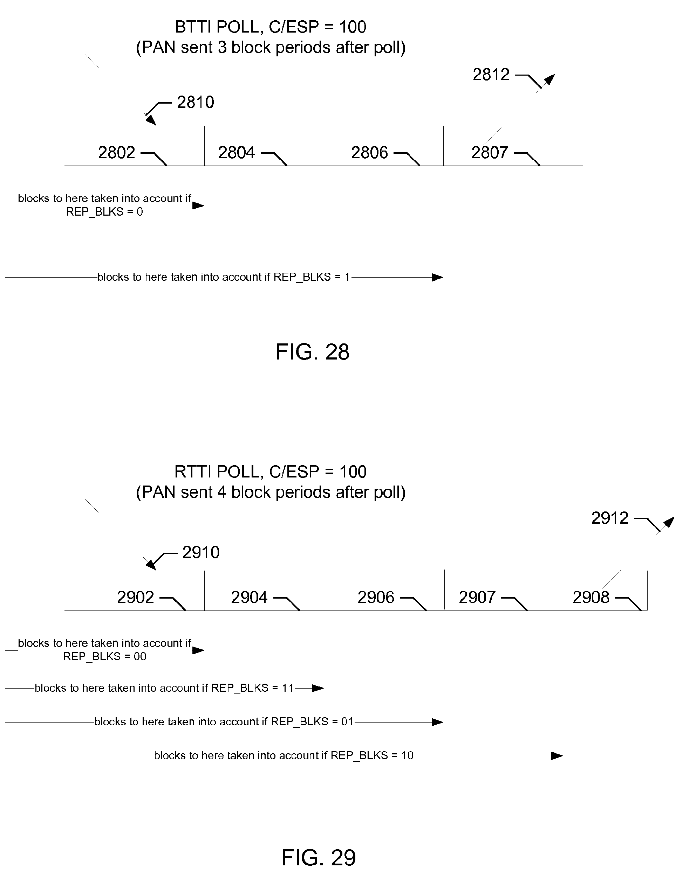

FIG. 28 is a block timeline for a system that uses BTTI and sends PAN responses 3 block periods after a poll or event. The timeline consists of block periods 2802-2807. In block period 2802, an MS (e.g., MS 3000) receives a poll request 2810. Alternatively, the MS 3000 may receive an event-based FANR such as a missing block detection. When sending PAN response 2812, as described in the conjunction with FIGS. 19-25, the MS 3000 will indicate which block periods have been taken into account using the REP_BLKS indication. According to the illustrated example, the MS 3000 will set the REP_BLKS indication to zero to indicate that the MS 3000 has taken into account block periods through block period 2802. Alternatively, the MS 3000 will set the REP_BLKS indication to one to indicate that the MS 3000 has taken into account block periods through block period 2806.

FIG. 29 is a block timeline for a system that uses BTTI and sends PAN responses 4 block periods after a poll or event. The timeline consists of block periods 2902-2908. In block period 2902, an MS (e.g., MS 3000) receives a poll request 2910. Alternatively, the MS 3000 may receive an event-based FANR such as a missing block detection. When sending PAN response 2912, as described in the conjunction with FIGS. 19-25, the MS 3000 will indicate which block periods have been taken into account using the REP_BLKS indication. According to the illustrated example, the MS 3000 will set the two bit REP_BLKS indication to 00 to indicate that the MS 3000 has taken into account block periods through block period 2902. Alternatively, the MS 3000 will set the REP_BLKS indication to 11 to indicate that the MS 3000 has taken into account block periods through block period 2904. Alternatively, the MS 3000 will set the REP_BLKS indication to 01 to indicate that the MS 3000 has taken into account block periods through block period 2906. Alternatively, the MS 3000 will set the REP_BLKS indication to 10 to indicate that the MS 3000 has taken into account block periods through block period 2908.

FIGS. 26-29 are provided as examples. Any REP_BLKS indications may be used when agreed-upon by the MS and the network. In addition, any number of bits may be used for REP_BLKS as desired or based on the number of different block periods that may be reported.

Referring to FIG. 30, shown is a block diagram showing a mobile station 3000 and a network providing wireless communication services. The mobile station 3000 has at least one antenna 3002, a processor 3006, wireless radio 3004 and device memory 3008 which may include non-volatile RAM, ROM and or volatile RAM. The mobile station is shown with a single wireless radio 3004, but in some embodiments, the mobile station may have multiple such wireless radios, for example if the mobile station is a multi-mode mobile station. The mobile station 3000 has a PAN generator 3010. Of course, the mobile station may have additional components to those shown, and the components shown may be arranged/combined/implemented differently than shown

The mobile station 3000 is configured, through inclusion of the PAN generator 3010 which may be implemented in suitable hardware, firmware, and/or or software stored in device memory 3008, to perform any of the methods described above.

The network 3020 is shown to include a serving transceiver 3021 having at least one antenna 3022. At the instant depicted, the mobile station 3000 is obtaining wireless communications services via transceiver 3021. Also shown are two neighbour transceivers 3024, 3026 with associated antennas 3025, 3027. Transceivers 3021, 3025, 3026 may, for example for part of respective base stations. The network 3020 has a PAN processor 3028 responsible for implementing any of the network side methods described herein. The functionality of the PAN processor may reside in the serving transceiver 3021 or elsewhere in the network.

In the illustrated example, the PAN processor is implemented as software and executed on processors forming part of the network 3020. However, more generally, the PAN processor may be implemented as software running on appropriate tangible processing platform, hardware, firmware, or any appropriate combination thereof.

Furthermore, it is to be understood that the network 3020 would have any appropriate components suitable for a network providing wireless communications services. Note that the network 3020 may include wires that interconnect network components in addition to components for providing wireless communication with mobile stations. The components of the network 3020 are implementation specific and may depend on the type of wireless network. There are many possibilities for the wireless network. The wireless network might for example be a GSM network.

In operation, the mobile station 3000 communicates with the wireless network 3020 over a wireless connection 3040 between the mobile station 3000 and the serving transceiver 3021. The PAN generator 3010 of the mobile station 3000 and the PAN processor of the network 3020 participates in the generation and processing of PAN information, in accordance with one or more of the methods described above.

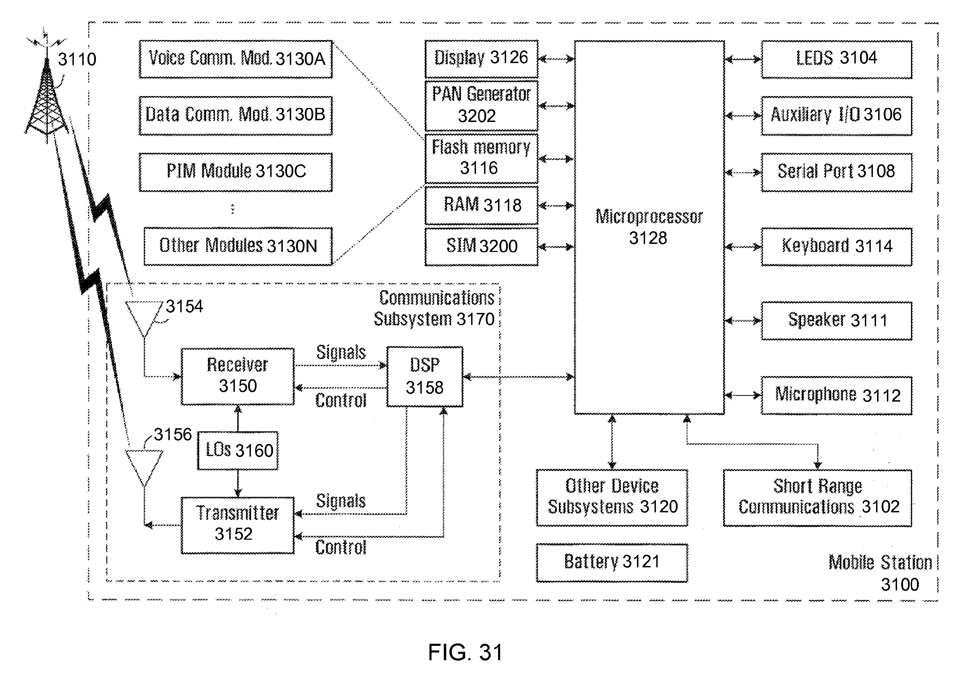

Referring now to FIG. 31, shown is a block diagram of another mobile station 3100 that may implement mobile station related methods described herein. It is to be understood that the mobile station 3100 is shown with very specific details for example purposes only. The mobile station 3100 has a PAN generator 3202 which functions as per the PAN generator 3010 of FIG. 30 described above.

A processing device (a microprocessor 3128) is shown schematically as coupled between a keyboard 3114 and a display 3126. The microprocessor 3128 controls operation of the display 3126, as well as overall operation of the mobile station 3100, in response to actuation of keys on the keyboard 3114 by a user.

The mobile station 3100 has a housing that may be elongated vertically, or may take on other sizes and shapes (including clamshell housing structures). The keyboard 3114 may include a mode selection key, or other hardware or software for switching between text entry and telephony entry.

In addition to the microprocessor 3128, other parts of the mobile station 3100 are shown schematically. These include: a communications subsystem 3170; a short-range communications subsystem 3102; the keyboard 3114 and the display 3126, along with other input/output devices including a set of LEDS 3104, a set of auxiliary I/O devices 3106, a serial port 3108, a speaker 3111 and a microphone 3112; as well as memory devices including a flash memory 3116 and a Random Access Memory (RAM) 3118; SIM 3200, and various other device subsystems 3120. The mobile station 3100 may have a battery 3121 to power the active elements of the mobile station 3100. The mobile station 3100 is in some embodiments a two-way radio frequency (RF) communication device having voice and data communication capabilities. In addition, the mobile station 3100 in some embodiments has the capability to communicate with other computer systems via the Internet.

Operating system software executed by the microprocessor 3128 is in some embodiments stored in a persistent store, such as the flash memory 3116, but may be stored in other types of memory devices, such as a read only memory (ROM) or similar storage element. In addition, system software, specific device applications, or parts thereof, may be temporarily loaded into a volatile store, such as the RAM 3118. Communication signals received by the mobile station 3100 may also be stored to the RAM 3118.

The microprocessor 3128, in addition to its operating system functions, enables execution of software applications on the mobile station 3100. A predetermined set of software applications that control basic device operations, such as a voice communications module 3130A and a data communications module 3130B, may be installed on the mobile station 3100 during manufacture. In addition, a personal information manager (PIM) application module 3130C may also be installed on the mobile station 3100 during manufacture. The PIM application is in some embodiments capable of organizing and managing data items, such as e-mail, calendar events, voice mails, appointments, and task items. The PIM application is also in some embodiments capable of sending and receiving data items via a wireless network 3110. In some embodiments, the data items managed by the PIM application are seamlessly integrated, synchronized and updated via the wireless network 3110 with the device user's corresponding data items stored or associated with a host computer system. As well, additional software modules, illustrated as other software module 3130N, may be installed during manufacture. In addition, the microprocessor 3128 executes SRI updating and SRI reading functions.

Communication functions, including data and voice communications, are performed through the communication subsystem 3170, and possibly through the short-range communications subsystem 3102. The communication subsystem 3170 includes a receiver 3150, a transmitter 3152 and one or more antennas, illustrated as a receive antenna 3154 and a transmit antenna 3156. In addition, the communication subsystem 3170 also includes a processing module, such as a digital signal processor (DSP) 3158, and local oscillators (LOs) 3160. The specific design and implementation of the communication subsystem 3170 is dependent upon the communication network in which the mobile station 3100 is intended to operate. For example, the communication subsystem 3170 of the mobile station 3100 may be designed to operate with the Mobitex^{TM}, DataTAC^{TM} or General Packet Radio Service (GPRS) mobile station data communication networks and also designed to operate with any of a variety of voice communication networks, such as Advanced Mobile station Phone Service (AMPS), Time Division Multiple Access (TDMA), Code Division Multiple Access CDMA, Personal Communications Service (PCS), Global System for Mobile station Communications (GSM), etc. Other types of data and voice networks, both separate and integrated, may also be utilized with the mobile station 3100.

Network access may vary depending upon the type of communication system. For example, in the Mobitex^{TM} and DataTAC^{TM} networks, mobile stations are registered on the network using a unique Personal Identification Number (PIN) associated with each device. In GPRS networks, however, network access is typically associated with a subscriber or user of a device. A GPRS device therefore typically has a subscriber identity module, commonly referred to as a Subscriber Identity Module (SIM) card, in order to operate on a GPRS network.

When network registration or activation procedures have been completed, the mobile station 3100 may send and receive communication signals over the communication network 3110. Signals received from the communication network 3110 by the receive antenna 3154 are routed to the receiver 3150, which provides for signal amplification, frequency down conversion, filtering, channel selection, etc., and may also provide analog to digital conversion. Analog-to-digital conversion of the received signal allows the DSP 3158 to perform more complex communication functions, such as demodulation and decoding. In a similar manner, signals to be transmitted to the network 3110 are processed (e.g., modulated and encoded) by the DSP 3158 and are then provided to the transmitter 3152 for digital to analog conversion, frequency up conversion, filtering, amplification and transmission to the communication network 3110 (or networks) via the transmit antenna 3156.

In addition to processing communication signals, the DSP 3158 provides for control of the receiver 3150 and the transmitter 3152. For example, gains applied to communication signals in the receiver 3150 and the transmitter 3152 may be adaptively controlled through automatic gain control algorithms implemented in the DSP 3158.

In a data communication mode, a received signal, such as a text message or web page download, is processed by the communication subsystem 3170 and is input to the microprocessor 3128. The received signal is then further processed by the microprocessor 3128 for an output to the display 3126, or alternatively to some other auxiliary I/O devices 3106. A device user may also compose data items, such as e-mail messages, using the keyboard 3114 and/or some other auxiliary I/O device 3106, such as a touchpad, a rocker switch, a thumb-wheel, or some other type of input device. The composed data items may then be transmitted over the communication network 3110 via the communication subsystem 3170.

In a voice communication mode, overall operation of the device is substantially similar to the data communication mode, except that received signals are output to a speaker 3111, and signals for transmission are generated by a microphone 3112. Alternative voice or audio I/O subsystems, such as a voice message recording subsystem, may also be implemented on the mobile station 3100. In addition, the display 3116 may also be utilized in voice communication mode, for example, to display the identity of a calling party, the duration of a voice call, or other voice call related information.

The short-range communications subsystem 3102 enables communication between the mobile station 3100 and other proximate systems or devices, which need not necessarily be similar devices. For example, the short-range communications subsystem may include an infrared device and associated circuits and components, or a Bluetooth^{TM} communication module to provide for communication with similarly-enabled systems and devices.

Numerous implementations have been described for RTTI and BTTI. It is to be understood that each implementation may be applied to one or both or RTTI and BTTI. In some implementations, a first implementation is applied for RTTI, and a second different implementation applied for BTTI.

Implementations have been described with respect to polled PANs and event-based pans. However, any implementations may be used with for or both PAN types. For example, some implementations may be implemented for polled PANs while other implementations may be implemented for event-based PANS.

Similarly, numerous implementations have been provided that have focussed on PANs sent in response to a poll. These solutions can also be applied to event-based PAN. In some implementations, a first implementations (or pair of implementations) is used for PANs sent in response to a poll, and a second implementation (or pair of implementations) is used for event-based PAN.

Numerous modifications and variations of the present disclosure are possible in light of the above teachings. It is therefore to be understood that the disclosure may be practiced otherwise than as specifically described herein.

In these examples, the processes represented by each flowchart may be implemented by one or more programs comprising machine readable instructions for execution by: (a) a processor, such as the microprocessor 3128 shown in the example mobile station 3100 discussed below in connection with FIG. 31, (b) a controller, and/or (c) any other suitable device. The one or more programs may be embodied in software stored on a tangible medium such as, for example, a flash memory, a CD-ROM, a floppy disk, a hard drive, a DVD, or a memory associated with the microprocessor 3128, but the entire program or programs and/or portions thereof could alternatively be executed by a device other than the microprocessor 3128 and/or embodied in firmware or dedicated hardware (e.g., implemented by an application specific integrated circuit (ASIC), a programmable logic device (PLD), a field programmable logic device (FPLD), discrete logic, etc.). For example, any one, some or all of the example mobile communications system components could be implemented by any combination of software, hardware, and/or firmware. Also, some or all of the processes represented by the flowcharts described herein, including FIGS. 20-25, may be implemented manually.

Further, although the example processes are described with reference to the flowcharts, including FIGS. 20-25, many other techniques for implementing the example methods and apparatus described herein may alternatively be used. For example, with reference to the flowcharts illustrated in FIGS. 20-25, the order of execution of the blocks may be changed, and/or some of the blocks described may be changed, eliminated, combined, and/or subdivided into multiple blocks. Any of the described blocks may be as implemented as part of an existing system. While the example block diagrams are described as implementing the processes of the flowcharts, the apparatus of the block diagrams may implement any process and, likewise, the processes of the flowcharts may be implemented by any apparatus, device, system, software, or combination thereof.

## Claims

1. A method performed by a mobile station comprising:
sending an indication of whether data blocks received by the mobile station after a poll are or will be accounted for in acknowledgement information;
receiving the poll from a network, the poll requesting acknowledgement information; and
sending to the network the acknowledgement information requested in the poll.

2. A method as defined in claim 1, wherein the poll is for piggy-backed acknowledgement information and wherein sending to the network the acknowledgement information comprises sending acknowledgement information piggy-backed with data.

3. A method as defined in claim 2, wherein sending to the network the acknowledgement information and sending the indication comprises sending acknowledgement information together with the indication of whether blocks received by a mobile station after the poll are accounted for in the acknowledgement information.

4. A method as defined in any preceding claim, wherein the acknowledgment information is sent in a PACKET DOWNLINK ACK/NACK and the PACKET DOWNLINK ACK/NACK includes the indication.

5. A method as defined in any preceding claim, wherein the indication is sent in a capabilities message.

6. A method as defined in any preceding claim, wherein the indication comprises one bit in a basic transmit time interval configuration and two bits in a reduce transmit time interval configuration.

7. A method as defined in any preceding claim, wherein the indication indicates that the acknowledgment information accounts for a block received during a radio block period immediately preceding a radio block period during which the acknowledgment information is being sent.

8. A method as defined in any preceding claim, wherein the indication is inserted in a reported bitmap field of the acknowledgment information.

9. A method as defined in any preceding claim, wherein the indication is inserted in a temporary flow identifier field of the acknowledgment information.

10. A method as defined in claim 9, further comprising inserting reported bitmap data in a second portion of the bits assigned to the temporary flow identifier field in the acknowledgment information.

11. A method as defined in any preceding claim, wherein the indication indicates that the acknowledgment information accounts for blocks received during two radio block periods immediately preceding a radio block period during which the acknowledgment information is being sent.

12. A device including hardware and software stored on a tangible computer readable medium that, during operation, cause the device to take action comprising:
sending an indication of whether data blocks received by the device after a poll are or will be accounted for in acknowledgement information;
receiving the poll from a network, the poll requesting acknowledgment information; and
sending to the network the acknowledgement information requested in the poll.

13. A device as defined in claim 12, wherein the poll is for piggy-backed acknowledgement information and wherein sending to the network the acknowledgement information comprises sending acknowledgement information piggy-backed with data.

14. A computer readable medium storing instructions that, when executed, cause a machine to carry out the method steps of any one of claims 1 to 11.
